(19) **Europäisches Patentamt**
**European Patent Office**
**Office européen des brevets**

(11) **EP 1 307 718 B1**

(12) **EUROPÄISCHE PATENTSCHRIFT**

(45) Veröffentlichungstag und Bekanntmachung des Hinweises auf die Patenterteilung:
**11.06.2008 Patentblatt 2008/24**

(21) Anmeldenummer: **01964897.1**

(22) Anmeldetag: **10.08.2001**

(51) Int Cl.:
*G01J 9/00* *(2006.01)*

(86) Internationale Anmeldenummer:
**PCT/DE2001/003078**

(87) Internationale Veröffentlichungsnummer:
**WO 2002/014814 (21.02.2002 Gazette 2002/08)**

(54) **VERFAHREN UND VORRICHTUNGEN ZUM BETRIEB EINES PMD-SYSTEMS**

METHOD AND DEVICE FOR OPERATING A PMD SYSTEM

PROCEDE ET DISPOSITIFS PERMETTANT DE FAIRE FONCTIONNER UN SYSTEME PMD

(84) Benannte Vertragsstaaten:
**DE FR GB IT**

(30) Priorität: **11.08.2000 DE 10039422**

(43) Veröffentlichungstag der Anmeldung:
**07.05.2003 Patentblatt 2003/19**

(73) Patentinhaber: **SIEMENS AKTIENGESELLSCHAFT**
**80333 München (DE)**

(72) Erfinder:
• **GULDEN, Peter**
**57078 Siegen (DE)**
• **VOSSIEK, Martin**
**31139 Hildesheim (DE)**
• **HEIDE, Patric**
**85579 Neubiberg (DE)**

(56) Entgegenhaltungen:
**DE-A- 19 902 612**

• **GULDEN P ET AL: "APPLICATION OF THE PHOTOELECTRONIC MIXING DEVICE TO OPTICAL MEASUREMENT OF PRESENCE, DISTANCE AND VELOCITY" 30TH EUROPEAN MICROWAVE CONFERENCE PROCEEDINGS. PARIS, OCT. 3 - 5, 2000, PROCEEDINGS OF THE EUROPEAN MICROWAVE CONFERENCE, LONDON: CMP, GB, Bd. 3 OF 3 CONF. 30, 5. Oktober 2000 (2000-10-05), Seiten 108-111, XP001060988 ISBN: 0-86213-212-6**
• **HEINOL H G ET AL: "PHOTOMISCHDETEKTOR ERFASST 3D-BILDER NEUES OPTISCHES BAUELEMENT VEREINIGT DETEKTION UND MISCHUNG" ELEKTRONIK, FRANZIS VERLAG GMBH. MUNCHEN, DE, Bd. 48, Nr. 12, 15. Juni 1999 (1999-06-15), Seite 80,82,84,86,88,90 XP000913168 ISSN: 0013-5658**
• **SCHWARTE R ET AL: "NEUARTIGE 3D-VISIONSYSTEME AUF DER BASIS LAYOUT-OPTIMIERTER PMD- STRUKTUREN" TECHNISCHES MESSEN TM, R.OLDENBOURG VERLAG. MUNCHEN, DE, Bd. 65, Nr. 7/8, Juli 1998 (1998-07), Seiten 264-271, XP000847213 ISSN: 0171-8096**

EP 1 307 718 B1

**Beschreibung**

Die Erfindung betrifft Verfahren und Vorrichtungen zum Betrieb eines PMD-Systems.

Ein PMD ("Photoelectronic Mixing Device") entspricht im Prinzip einem Pixel eines CMOS-Kamerachips. Im PMD kann zusätzlich zur Intensität des Lichts auch eine Laufzeit $\tau$ zwischen einer gesendeten intensitätsmodulierten Welle, typischerweise Licht, und der vom PMD empfangenen Welle $P_M$ gemessen werden. Der Sender emittiert dazu eine in der Intensität modulierte Welle, die nach Durchlaufen einer Übertragungsstrecke auf das PMD trifft. Dort generiert die Welle wie auf einer konventionellen Photodiode Ladungsträger. Die Zahl der erzeugten Ladungsträger ist dabei proportional zur Intensität der Welle.

Eine Eigenschaft eines PMD-Systems besteht darin, daß wechselweise zwei gegenüberliegende Ausgänge A und B geöffnet werden. Das Umschalten zwischen den beiden Ausgängen erfolgt über ein Modulationssignal $U_{mod}$, das an das PMD angelegt wird. Diese Spannung wird mit derselben Frequenz $f_{mod}$ moduliert wie der Sender. Gelangt nun die Welle ohne Verzögerung auf das PMD, dann entspricht die Zeit, in der Ladungsträger generiert werden, der Öffnungszeit von Ausgang A. Die erzeugten Ladungen gelangen somit vollständig auf Ausgang A. Trifft die Welle verzögert auf das PMD, dann werden die Ladungsträger entsprechend später generiert. Somit wird ein Teil der Ladungen während der Öffnungszeit von Ausgang A erzeugt, ein weiterer Teil dagegen während der Öffnungszeit von Ausgang B. Deshalb ist die Differenz zwischen Ausgang A und Ausgang B ein Maß für die Laufzeit $\tau$ des Signals, die Summe von A und B dagegen ein Maß für die Intensität des einfallenden Lichtes, siehe dazu DE 197 04 496 A1 oder R. Schwarte et al.: "Schnelle und einfache optische Formerfassung mit einem neuartigen Korrelations-Photodetektor-Array", Vortrag auf der DGZfP-GMA Fachtagung in Langen, 28./29 April 1997.

Aus Heinol H. et al: "Photomischdetektor erfasst 3D-Bilder", Elektronik, Weka Fachzeitschriftenverlag, 1999, ist ein Verfahren zur Entfernungsmessung mittels eines PMD Systems gemäss dem Oberbegriff des Anspruchs 1 bekannt.

Die Auslesespannungen $U_a$, $U_b$ können direkt durch den generierten Ladungsstrom erzeugt werden (nicht integrierender Betrieb). Bei integrierendem Betrieb sind die Auslesespannungen $U_a$ und $U_b$ die Spannungen, die nach Integration der Ladungen an den Ladungstöpfen entstehen. Integrierende PMDs weisen die Besonderheit auf, daß die Töpfe, in denen die Ladungsträger gesammelt werden, regelmäßig mittels eines Reset-Signals R der Länge $t_R$ geleert werden müssen. Das Reset kann entweder nach fest vorgegebenen Zeitintervallen $t_{int}$ mit der Frequenz $f_{int} = 1 / t_{int}$ erfolgen, oder adaptiv bei Erreichen einer gewissen Spannungsschwelle an den Ladungstöpfen.

Für die Ausgangssignale $U_a$, $U_b$ des PMD, die dem Produkt der einfallenden elektromagnetischen Wellen mit dem Modulationssignal $U_{PMD\ mod}$ bzw. dem um 180° phasenverschobenen komplementären Modulationssignal $\overline{U}_{PMD\ mod}$ entsprechen, gilt, je nach Ausführung der Akkumulationsgates (integrierend/nicht integrierend), unter Annahme von gleicher Frequenz der einfallenden sinusförmig intensitätsmodulierten Lichtwelle und des Modulationssignals, und mit anschließender Unterdrückung hochfrequenter Anteile mittels Tiefpaß:

$$U_a = \kappa \cdot P_M \cdot \cos(\Delta\varphi) + \kappa \cdot P_H / 2 \qquad (1)$$

$$U_b = \kappa \cdot P_M \cdot \cos(\Delta\varphi + 180°) + \kappa \cdot P_H / 2 \qquad (2)$$

Bevorzugt wird der Tiefpaß bereits innerhalb der integrierten Ausleseschaltung realisiert und ist daher nicht als externe Systemkomponente notwendig. In den Gl. (1) und (2) entsprechen $\Delta\varphi$ der Phasenverschiebung zwischen der einfallenden elektromagnetischen Welle und dem Modulationssignal, $P_M$ der Leistung der einfallenden Welle, $\kappa$ einem die Empfindlichkeit des PMD, die Amplitude der Modulationsspannung, den Reflektionskoeffizienten am Objekt sowie die Streckendämpfung berücksichtigender Proportionalitätsfaktor und $P_H$ der Leistung der Hintergrundbeleuchtung. Bei integrierenden PMDs enthält $\kappa$ auch noch die Integrationszeit $t_i$. Durch Bildung eines Differenzsignals $U_d$ wird die Hintergrundbeleuchtung unterdrückt, und es gilt für das Differenzsignal $U_d = U_a - U_b$:

$$U_d = \kappa \cdot P_M \cdot \cos(\Delta\varphi) = \text{const} \cdot \cos(\Delta\varphi) \qquad (3).$$

Die Phasenverschiebung des Signals setzt sich dann aus dem laufzeitbedingten Anteil und einer festen Phasenverschiebung $\varphi_d$ z.B. durch unterschiedliche Laufzeiten $\tau$ in der Elektronik oder auch Verzögerungsglieder zusam-

men:

$$\Delta\varphi = 2\pi \cdot f_{mod} \cdot \tau + \varphi_d \qquad\qquad (4).$$

Als problematisch für die direkte Berechnung der Phasenverschiebung erweist sich dabei die Abhängigkeit der Ausgangssignale $U_a, U_b$ bzw. $U_d$ sowohl von $\cos(\Delta\varphi)$ als auch von $P_M$. Falls die Unterdrückung der Hintergrundbeleuchtung nicht unbedingt notwendig ist, kann die Laufzeit $\tau$, und somit die Entfernung eines Objekts, bzw. die Dopplerfrequenz $f_d$ und somit die Geschwindigkeit des Objekts direkt aus Gl. (1) oder Gl. (2) ermitteln werden.

Aus Heinol, Xu und Schulte: "Laufzeitbasierte 3D-Kamerasysteme - Smart Pixel Lösungen", DGZIP Fachtagung Optische Formerfassung, Stuttgart 5.-6. September 1999, ist eine Bestimmung der Phasendifferenz bzw. Laufzeitdifferenz durch Aufnahme mehrerer Meßwerte mittels Phasenmodulationsverfahren (PSK-Verfahren) oder PN-Modulation bekannt. Dafür werden in der Regel integrierende PMDs verwendet. Dabei wird die Phasenverzögerung $\varphi_d$ durchgestimmt. Anschließend wird das Maximum der so gewonnenen Korrelationskurve gesucht und die Laufzeit aus $2\pi \cdot f_{mod} \cdot \tau = 2\pi - \varphi_{dmax}$ bestimmt. Der technische Aufwand zur Anwendung dieser Methode ist beträchtlich, so wird z.B. in die Phasenverzögerung $\varphi_d$ mittels direkter digitaler Frequenzsynthese ("DDS") und digitalem Phasenregister erzeugt.

Ein alternatives Verfahren ("I-Q-Verfahren") wird in DE 197 04 496 A1 beschrieben, wobei entweder nacheinander oder mittels spezieller Pixelstrukturen/anordnungen zwei um 90° zueinander phasenverschobene Werte für $U_d$ aufgenommen werden. Aus diesen wird dann die Phase $\Delta\varphi$ berechnet:

$$\Delta\varphi = \arctan\frac{U_d(90°)}{U_d(0°)}$$

Alternativ werden in DE 197 04 496 A1 orthogonale Pseudo-Noise Codes (PN) vorgeschlagen, die den Vorteil der Mehrzielfähigkeit bieten.

Die bekannten Verfahren gehen von statischen, d.h. innerhalb der Meßaufnahme nicht bewegten Zielen aus. Bewegen sich hingegen die Zielobjekte während der Meßaufnahme, dann ist die Laufzeit $\tau$ nicht mehr konstant während der Messung. Es gilt mit $\tau(t) = 2 \cdot d(t)/c = 2/c \cdot (v_d \cdot t + d_0)$:

$$\Delta\varphi = 2\pi \cdot f_{mod} \cdot \tau(t) + \varphi_d = 2\pi \cdot f_{mod}\frac{2}{c}(v_d \cdot t + d_0) + \varphi_d \qquad (5)$$

Dabei entspricht $d$ der aktuellen Entfernung, $d_0$ der Ausgangsentfernung, die der Ausgangslaufzeit $\tau_0$ entspricht, $c$ ist die Lichtgeschwindigkeit und $v_d$ die Geschwindigkeit des Objekts. Durch Einsetzen von Gl. (5) in Gl. (3) erhält man für das Differenzsignal $U_d$:

$$U_d = \kappa \cdot P_M \cdot \cos(\Delta\varphi) = \kappa \cdot P_M \cdot \cos\left(2\pi \cdot f_{mod}\frac{2}{c}(v_d \cdot t + d_0) + \varphi_d\right) \qquad (6)$$

Dieses Signal weist eine zeitabhängige Phase auf. Dabei enthält der zeitabhängige Teil der Phase die Geschwindigkeitsinformation, der konstante Teil die Entfernungsinformation. Der zeitabhängige Teil läßt sich durch Ableiten der Phase bestimmen, entspricht also der Frequenz des Signals:

$$f = \frac{1}{2\pi} \cdot \frac{\partial}{\partial t}\Delta\varphi(t) = \frac{2}{c}v_d \cdot f_{mod} = 2f_d$$

wobei die der Dopplerfrequenz $f_d = v_d/\lambda = v_d \cdot f_{mod}/c$ gemäß E. Pehl: "Mikrowellen in der Anwendung", Hüthig Verlag Heidelberg 1993, entspricht. Die Frequenz und damit die Geschwindigkeit bestimmt man dann mittels Spektralanalyse (z.B. FFT) des Signals nach Gl. (6). Anschließend kann man die gesuchte Phase z. B. als die Phase des Maximums im Frequenzspektrum bestimmen und aus ihr mittels Gl. (4) die Entfernung berechnen. Grundsätzlich wird hier angenommen, das die Dopplerfrequenz wesentlich kleiner als die Grenzfrequenz des Tiefpasses ist.

Für den Fall der integrierenden Messung erhält man bei gegenüber der Grundperiode des Dopplersignals kurzer Integrationszeit $t_{int}$ << 1/ $f_d$ einen Meßfehler durch den mitintegrierten zeitabhängigen Teil. Bei langer Integrationsdauer $t_{int}$ >> 1/ $f_d$ erhält man kein zur Laufzeit von $\Delta\varphi$ proportionales Differenzsignal mehr. Somit ist die Entfernung von sich bewegenden Objekten bestenfalls mit erhöhtem Meßfehler meßbar.

Des weiteren können die beiden erstgenannten Verfahren nur ein Ziel erfassen und vermessen.

Gemeinsam ist den genannten Verfahren, das sie auf einer Modulation der Phasenverzögerung $\varphi_d$ in Gl.(4) beruhen.

Es ist die Aufgabe der vorliegenden Erfindung, eine Möglichkeit zum Betrieb eines PMD mit vereinfachtem Aufbau und erhöhter Messgenauigkeit sowie einer Messung von Geschwindigkeit und/oder Entfernung bereitzustellen.

Diese Aufgabe wird durch Verfahren gemäß den Patentansprüchen 1 und 3 sowie durch eine Anordnung gemäß Patentanspruch 17 gelöst.

Zur Ermöglichung einer Geschwindigkeitsmessung wird ein PMD verwendet, bei dem mittels eines Modulationssignals $U_{mod}$ mit einer beliebigen, aber dann fest gewählten Modulationsfrequenz $f_{mod}$ und eines dazu komplementären Modulationssignals $\overline{U}_{mod}$ angesteuert wird, und ein Sender elektromagnetische Strahlung aussendet, die mittels des mindestens einen Modulationssignals $U_{mod}$ intensitätsmoduliert wird.

Das Verfahren ist dadurch gekennzeichnet, dass durch Abtasten mindestens eines der Ausgangssignale $U_a$, $U_b$ aus den Gl. (1), (2) und/oder, bevorzugt, durch Abtasten des analog erzeugten Differenzsignals $U_d$ aus Gl. (3) mehrere Meßwerte aufgenommen werden. Das Differenzsignal $U_d$ kann dabei auch numerisch aus den Ausgangssignalen $U_a$, $U_b$ bestimmt werden.

Aus denen so ermittelten Meßreihen, insbesondere des Differenzsignals $U_d$, wird mittels einer Spektralanalyse, insbesondere einer schnellen Fouriertransformation, mindestens ein zugehöriges Spektrum gebildet.

Sodann wird im Spektrum ein Signalanteil mit signifikanter, insbesondere maximaler, Amplitude bestimmt, und die zugehörige Frequenz $f_{max}$ des Signalanteils mit signifikanter Amplitude ermittelt. Dies können bei Vorliegen mehrerer auszumessender Objekte eine oder mehrere einem Objekt zugehörige Frequenzen sein. Insbesondere wird die Frequenz $f_{max}$ mit maximaler Amplitude zur Geschwindigkeitsmessung bevorzugt.

Aus einer oder mehreren Frequenzen mit signifikanter, insbesondere maximaler, Amplitude kann z. B. dann eine jeweils zugehörige Dopplerfrequenz $f_d$ bestimmt werden. Aus der Dopplerfrequenz $f_d$ wiederum lässt sich eine Geschwindigkeit bestimmen. Bei mehreren bestimmten Geschwindigkeit kann z.B. durch gewichtete Mittelung eine erhöhte Genauigkeit erzielt werden.

Dieses Verfahren kann bevorzugt mittels einer Anordnung ausgeführt werden, bei der kein Integrator dem PMD nachgeschaltet ist, so dass das Differenzsignals $U_d$ direkt über der Zeit abtastbar ist. Es ist aber auch möglich ein integrierendes PMD zu verwenden und diesem einen (Zeit-)Differenzierer nachzuschalten, allerdings verschlechtert sich dabei der Signal zu Rauschabstand deutlich.

Auch kann bei Bedarf weiterhin, z. B. direkt aus der Phase des Maximums im komplexen Fourierspektrum, die Laufzeit $\tau$ zur Entfernungsmessung bestimmt werden.

Es wird bevorzugt, wenn das Verfahren ausser zur Geschwindigkeitsmessung auch zur Messung der Entfernung eines Objektes eingesetzt wird, insbesondere, wenn die Entfernung mittels der Phase $\Delta\varphi$ der signifikanten Amplitude bestimmt wird.

Ein weiteres Verfahren zur Lösung der Aufgabe besteht darin, dass ein PMD mittels mindestens eines Modulationssignals $U_{mod}$ angesteuert wird, und ein Sender elektromagnetische Strahlung aussendet, die mittels des mindestens einen Modulationssignals $U_{mod}$ intensitätsmoduliert wird, wobei das Modulationssignal $U_{mod}$ nun zwischen mindestens zwei Modulationsfrequenzen variiert wird. Die Ansteuerung erfolgt typischerweise ausser mit $U_{mod}$ auch mit einem dazu komplementären Modulationssignals $\overline{U}_{mod}$; es kann aber auch möglich sein, nur das Modulationssignals $U_{mod}$ zur Ansteuerung zu verwenden, während beispielsweise das komplementäre Modulationssignal $\overline{U}_{mod}$ schaltungstechnisch im PMD erzeugt wird. Auch ist eine Konstruktion eines PMD vorstellbar, bei dem das komplementäre Modulationssignal $\overline{U}_{mod}$ durch den physikalischen Aufbau des PMD entfallen kann.

Ein Verfahren unter Variation der Modulationsfrequenz (z.B. 2-FSK, n-FSK, FMCW, FSCW) ergibt den Vorteil einer einfacheren Anordnung, weil gegenüber dem Stand der Technik die Anordnung zur Phasenverzögerung entfällt. Die reduzierte Anzahl von Elementen im Modulationskreis ermöglicht zudem eine genauere Messung und insbesondere eine Verringerung der Temperaturdriften. Bei Verwendung geeigneter Auswertealgorithmen ist zudem die simultane Messung von Geschwindigkeit und Entfernung möglich. Dies ist z.B. bei der Montage auf bewegten Systemen wie Autos oder Roboterplattformen wichtig. Zudem werden die Systeme je nach Verfahren mehrzielfähig.

In beiden Verfahren ist eine Verwendung eines bestimmten Senders nicht beschränkt, sondern typischerweise in der Praxis vom Anwendungszweck vorgegeben. Beispielsweise kann mindestens eine Lichtquelle (Laser, Laser-Array, Quecksilberdampflampe, LED oder LED-Array, Leuchtstoffröhre etc.) oder ein in einem anderen Band strahlender Sender (Mikrowellensender etc.) verwendet werden.

In beiden Verfahren ist zudem die Verwendung des Modulationssignals $U_{mod}$ oder des komplementären Modulationssignals $\overline{U}_{mod}$ gleichwertig, z. B. kann der Sender mit dem Modulationssignals $U_{mod}$ oder dem komplementären Modulationssignals $\overline{U}_{mod}$ angesteuert werden. Es sind auch Anordnungen mit zwei zueinander phasenverschobenen, aber nicht komplementären Modulationssignalen denkbar.

Auch bei Verwendung mehrerer Modulationsfrequenzen $f_1, f_2, f_i$ werden mindestens eines der Ausgangssignale $U_a, U_b$ aus den Gl. (1), (2) und/oder, bevorzugt, durch Abtasten des analog erzeugten Differenzsignals $U_d$ aus Gl.(3) mehrere Meßwerte aufgenommen werden. Das Differenzsignal $U_d$ kann dabei auch numerisch aus den Ausgangssignalen $U_a, U_b$ bestimmt werden. Es sind auch andere geeignete Kombinationen der Ausgangssignale verwendbar, solange sie eine eindeutige Berechnung von Geschwindigkeit und/oder Entfernung eines Objekts zulassen.

Im folgenden werden mehrere Methoden zum Betrieb eines PMD-Systems beschrieben. Selbstverständlich ist die Erfindung nicht auf diese beschränkt.

a) Monofrequentes Verfahren

Durch Entfernen des bisher nach dem Stand der Technik verwendeten Integrators, siehe z. B. R. Schwarte et al., und kontinuierliches Abtasten entweder des Differenzsignals $U_d$ oder der Abtastung der Ausgangssignale $U_a, U_b$ unter Einhaltung des Abtasttheorems lässt sich eine Meßreihe aufnehmen. $U_d(t)$ kann dabei auch durch digitale Subtraktion von $U_a$ und $U_b$ ermittelt werden. Aus den diskretisierten Werten für Gl.(6) oder den Signalen $U_a, U_b$ kann man die Dopplerfrequenz $f_d$ mittels Spektralanalyse (z.B. FFT) des abgetasteten Signals gewinnen.

Das Weglassen des Integrators ist hier problemlos möglich, da die bekannten Spektralanalyseverfahren aus allen Meßpunkten die gemittelten Frequenzen bestimmen, was einer Mittelung über alle Meßpunkte entspricht. Somit das ist das Signal-zu-Rausch-Verhältnis bei diesem Verfahren für stehende Ziele mit dem Signal/Rausch-Verhältnis am Ende des Integrationsprozesses vergleichbar.

Zur weiteren Auswertung wird das Spektrum, z.B. das Fourierspektrum, gebildet. In diesem Spektrum wird ein Signalanteil mit signifikanter, insbesondere maximaler, Amplitude gesucht, und die zugehörige Frequenz $f_{max}$ ermittelt. Daraus lässt sich die Geschwindigkeit ermitteln. Vorzugsweise geschieht dies über eine Bestimmung der Dopplerfrequenz $f_d$ mit $f_d = f_{max}/2$.

Weiterhin kann auch die Entfernung über die Phase $\varphi_{ges}$ des Signals bestimmt werden, entweder direkt als die Phase des Signalanteil mit signifikanter, insbesondere maximaler, Amplitude im komplexen Spektrum oder auch z.B. mittels "least square fit", siehe dazu G. Strang, "Linear Algebra and its applications", 3rd ed. 1988, Harcourt Brace Jovanovich College Publishers. Aus der Phase erhält man die Laufzeit $\tau = (\varphi_{ges} - \varphi_d)/(2\pi \cdot f_{mod})$.

Zur einfachen Aufnahme des Spektrums wird vorzugsweise ein nichtintegrierender PMD verwendet. Es ist aber auch möglich, einen integrierenden PMD mit nachgeschaltetem Differenzierer einzusetzen, allerdings nur mit deutlich verschlechtertem Signal-zu-Rausch-Abstand.

Von Nachteil ist allgemein, daß der Delay-offset $\varphi_d$ exakt bekannt sein muß, und die halbe Wellenlänge der Modulationsfrequenz dem Eindeutigkeitsbereich des Verfahrens entspricht.

b) 2-Frequenz-Verfahren (2-FSK-Verfahren)

Die Nachteile des monofrequenten Verfahrens können durch eine Verwendung des 2-Frequenz-Verfahrens vermieden werden. Dabei wird ein amplituden- bzw. intensitätsmoduliertes Modulationssignal $U_{mod}$ (und $\overline{U}_{mod}$) mit einer Modulationsfrequenz $f_1$ auf das PMD und den Sender gegeben. Im PMD wird das empfangene, vom Objekt reflektierte, Signal mit dem Modulationssignal $U_{mod}$ überlagert und ein erstes Ausgangssignal, vorzugsweise die Differenzspannung $U_{d1}$, entweder analog oder digital gebildet. Nun wird eine zweite Modulationsfrequenz $f_2$ eingestellt und in gleicher Weise ein zweites Ausgangssignal, typischerweise eine zweite Differenzspannung $U_{d2}$, aufgenommen.

Für jede der beiden Modulationsfrequenzen $f_1, f_2$ kann nun für bewegte Ziele eine Ermittlung von Geschwindigkeit und/oder Entfernung jeweils getrennt erfolgen, und anschließend die niedrigere Modulationsfrequenz $f_2$ zur Bestimmung des Eindeutigkeitsbereichs und die höhere Modulationsfrequenz $f_1$ zur Erhöhung der Genauigkeit verwendet wird.

Dies kann beispielsweise dadurch geschehen, dass für beide Meßreihen die jeweilige Dopplerfrequenz $f_{d1}, f_{d2}$ bestimmt wird. Anschließend wird wie zuvor für jede der beiden Maxima im Frequenzspektrum die Phase bestimmt. Aus ihr läßt sich die Entfernung rekonstruieren, wobei die Phase für die niedrige Frequenz $f_2$ insbesondere zum Erreichen eines großen Eindeutigkeitsbereichs verwendet wird. Die Phase der höheren Modulationsfrequenz $f_1$ wird dagegen insbesondere für die genauere Ermittlung der Entfernung herangezogen. Typischerweise werden daher zwei weit auseinanderliegende Modulationsfrequenzen $f_1, f_2$ verwendet, um so einen großen Eindeutigkeitsbereich bei gleichzeitig hoher Genauigkeit zu erreichen. Die Reihenfolge der Modulationsfrequenzen $f_1, f_2$ kann beliebig verändert werden

Insbesondere bei hohen Frequenzen ergibt sich ein Vorteil daraus, das der Eindeutigkeitsbereich durch die

niedrigere Frequenz $f_2$ bestimmt wird, wodurch der Genauigkeitsvorteil einer hohen Frequenz $f_1$ mit dem Vorteil eines großen Eindeutigkeitsbereichs verbunden wird. Wenn die Differenz wesentlich kleiner als die Modulationsfrequenz ist, dann stimmen zudem die in beiden Pfaden durch die zusätzlichen Laufzeiten verursachten Phasenverzögerungen überein. Diese müssen dann nicht mehr bekannt sein. Ein weiterer Vorteil gegenüber dem Stand der Technik ist der Wegfall des Bauteils zur Phasenverschiebung.

Das 2-Frequenz-Verfahren bietet aber auch in statischen Meßsituationen Vorteile, insbesondere beim integrierten Ausleseverfahren. Dann wird $f_2$ bevorzugt so gewählt, daß sich der gewünschte Meßbereich $d_w$ eindeutig vermessen läßt. Es ergibt sich bei einem Eindeutigkeitsbereich von $\pi/2$ die Gleichung $f_2 = (\pi/4)\cdot(c/d_w)$. Man erhält so zwei Werte $U_{d1}, U_{d2}$ für Gl.(3).

Eine Methode zur Entfernungsbestimmung besteht darin, das man zwei weitere Werte für jede der beiden Frequenzen aufnimmt und die Entfernung für jede Frequenz nach dem I-Q-Verfahren oder dem PSK-Verfahren berechnet. Anschließend verwendet man den Entfernungswert der niedrigen Frequenz zur Bestimmung des Eindeutigkeitsbereichs, und den für die hohe Frequenz zum Erreichen hoher Genauigkeit.

Eine Geschwindigkeitsbestimmung kann so durchgeführt werden, dass wieder zunächst getrennt aus der der Frequenz $f_{max}$ des Signalanteils mit signifikanter Amplitude zugehörigen Phase $\Delta\varphi$ im Spektrum eine dieser Frequenz $f_{max}$ zugehörige Entfernung bestimmt wird.

Eine weitere Berechnungsmethode ist die direkte Bildung des Koeffizienten von $U_{d1}$ und $U_{d2}$, woraus, ausgehend von gleicher Signalamplitude und Integrationszeit, folgt:

$$\frac{U_{d1}}{U_{d2}} = \frac{\cos\left(2\pi f_1 \cdot \tau\right)}{\cos\left(2\pi f_2 \cdot \tau\right)} \qquad (7),$$

Die so entstandene Funktion hängt nur von der Laufzeit $\tau$ ab.

Von Vorteil bei dieser Methode sind der einfache Aufbau und die Verwendung nur zweier Meßwerte. Nachteile sind die fehlende Mehrzielfähigkeit, Begrenzung des Meßbereichs auf T/4 der größeren Frequenz und die Verwendung einer Look-up-Tabelle.

Insbesondere bevorzugt wird $f_1 = 2\cdot f_2$ gewählt, da in diesem Fall Gl.(7) analytisch nach $\tau$ auflösbar ist mit $k = U_{d1}/U_{d2}$:

$$\tau = \frac{1}{2\pi f_1} \cdot \arccos\left(\frac{k}{4} \pm \sqrt{\frac{k^2}{16} + 1}\right)$$

Diese Gleichung wird dann im Mikroprozessor an Stelle der Look-up-Tabelle gelöst, der benötigte Speicherplatz wird frei.

Die Verwendung eines sinusförmig modulierten Signals bietet den Vorteil der einfachen elektrischen Realisierung, allerdings wird der Zusammenhang zwischen der Phase des empfangenen Signals und dem Differenzsignal $U_d$ nichtlinear, siehe Gl.(3).

Günstig ist daher in bestimmten Fällen die Verwendung rechteckförmig in der Intensität modulierter Modulationsignale $U_{mod}$. Der Zusammenhang zwischen Phase und Differenzsignal wird dann linear, es ergibt sich für integrierende und nicht integrierende PMDs innerhalb einer Periode $2\pi$:

$$U_d = \kappa \cdot P_M \cdot \left(1 - 2 \cdot \frac{\Delta\varphi}{2\pi}\right) \qquad (8)$$

Dieser lineare Zusammenhang läßt sich auch zur Realisierung der Entfernungsmessung mittels rechteckmoduliertem 2-Frequenzverfahren (2-FSK) verwenden, bei dem sich z. B. die Laufzeit $\tau$ wiederum analytisch aus zwei gespeicherten Modulationsfrequenzen $f_1$ und $f_2$ berechnen läßt gemäß:

$$\tau = \frac{(U_{d1} - U_{d2})}{4 \cdot (U_{d1} \cdot f_2 - U_{d2} \cdot f_1)} \tag{9}$$

bzw. bei bekannten Frequenzen $f_1$ und $f_2$ mit $k = f_2/f_1$ zu:

$$\tau = \frac{1}{4 \cdot f_2} \cdot \frac{(U_{d1} - U_{d2})}{(U_{d1} - U_{d2} \cdot k)} \tag{10}.$$

Dies bietet den Vorteil, daß der zweite Bruch in Gl.(10) direkt analog realisierbar ist, so dass die Notwendigkeit eines Mikroprozessors entfällt.

c) n-Frequency-Shift-Keying-Verfahren (n-FSK)

Eine verallgemeinerte Methode ergibt sich, wenn statt mit nur zwei Frequenzen die Laufzeit für mehrere Frequenzen bestimmt wird. Die Anwendung des n-Frequenzverfahrens (n-FSK-Verfahren), das eine Verallgemeinerung des 2-FSK-Verfahrens darstellt, bietet den Vorteil erhöhter Genauigkeit.

Dazu werden N verschiedene Messwerte für N verschiedene diskreten Frequenzen analog zum 2-FSK-Verfahren aufgenommen und im Mikroprozessor gespeichert. Allgemein können alle beim 2-FSK-Verfahren verwendeten Auswerteverfahren verwendet werden. Es besteht aber auch die Möglichkeit der direkten Auswertung mittels "Least Square Fit"-Verfahren.

Die Laufzeit $\tau$ ist direkt in jedem Meßwert i enthalten, für den

$$U_{di} = 2 \cdot \kappa \cdot P_M \cdot \cos(\Delta\varphi_i), \quad \text{mit} \quad \Delta\varphi_i = 2 \cdot \pi \cdot f_i \cdot \tau \tag{11}.$$

gilt. Dabei ist der die Integrationszeit $t_{int}$ und die Empfindlichkeit enthaltene Parameter $\kappa$ für alle i Frequenzen gleich und bekannt. Die empfangene modulierte Strahlung, typischerweise Licht, ist bei schnell aufeinander folgenden Messungen ebenfalls konstant, allerdings ist die Größe aufgrund der unbekannten Reflektivität und des unbekannten Laufwegs nicht bestimmt. Die Phase $\Delta\varphi_i$ ist für alle Frequenzen unterschiedlich und ebenfalls nicht bekannt. Zusammengefaßt läßt sich Gl. (11) auch als

$$U_{di} = K \cdot P_M \cdot C_i \tag{12}$$

schreiben, mit $K = 2 \cdot \kappa \cdot t_{int}$ und $C_i = \cos(\Delta\varphi_i)$. Somit liegen bei Aufnahme von Meßwerten über N unterschiedliche Frequenzen N+1 Unbekannte vor.

Dieses Gleichungssystem läßt sich mit den gängigen Methoden zur Lösung unterbestimmter Gleichungssysteme, z.B. dem "least square fit"-Verfahren, lösen. Der Stand der Technik hierzu ist z.B. in G. Strang zu finden. Eine Möglichkeit zur Erhöhung der Genauigkeit besteht im Einsatz des sog. "weighed least square". Dabei werden die Werte für höhere Frequenzen stärker berücksichtigt. Aus den Lösungen für $C_i$ in Gl. (12) erhält man die Laufzeit $\tau = (2\pi \cdot f_i)^{-1}$ arccos ($C_i$). Die Genauigkeit von $\tau$ erhöht man bevorzugt durch anschließendes Mitteln über alle i Werte. Dabei können auf Grund der bei höheren Frequenzen besseren Genauigkeit die entsprechenden $\tau$ stärker gewichtet werden. Der Vorteil dieser Methode besteht darin, daß alle Werte zur Berechnung der Entfernung verwendet werden.

Das n-FSK-Verfahren bietet sich auch bei der Verwendung rechteckförmiger Modulationssignale an. Analog zum 2-FSK-Verfahren werden die Frequenzen $f_i$ nacheinander eingestellt und jedesmal der jeweilige Differenzwert $U_{di}$ aufgenommen. So erhält man bei Annahme nur eines Reflektors ein überbestimmtes Gleichungssystem:

$$U_{di} = \kappa \cdot t_{int} \cdot P_M \cdot \left(1 - 2 \cdot \frac{\omega_i \cdot \tau}{2\pi}\right) \qquad\qquad (13)$$

Dieses läßt sich mit den gängigen Methoden zur Lösung überbestimmter Gleichungssysteme nach $\tau$ auflösen, siehe G. Strang.

d) Frequenz-Kennlinien-Verfahren

Eine weiteres frequenzmoduliertes Verfahren zur Laufzeit/Entfernungsbestimmung besteht darin, mittels eines verstimmbaren Frequenzgenerators, z.B. eines spannungsgesteuerten Oszillators (= VCO, "Voltage Controlled Oszillator"), das Modulationssignal $U_{mod}$ zu erzeugen. Die Frequenz $U_{mod}$ des Modulationssignals wird dabei durch den Mikroprozessor auf einen bestimmten Wert eingestellt. Das Ausgangssignal des VCO wird direkt auf den Sender gespeist, und gelangt wie beim FSK-Verfahren über den Treiber auf das PMD. Das entstehende Differenzsignal $U_d$ wird A/D-gewandelt, und vom Mikroprozessor gespeichert. Der Mikroprozessor stellt dann einen neuen Frequenzwert ein, und der nächste Wert für $U_d$ wird aufgenommen.

Wie bereits beschrieben, ist das Differenzsignal proportional zu Reflektivität, Integrationszeit $t_i$ und Phasenfaktor $\cos(\Delta\varphi)$. Der Phasenunterschied für die verschiedenen Modulationsfrequenzen ist durch Gl.(4) gegeben. Unter der Annahme gleicher Reflektivität und Integrationszeit für die verschiedenen Frequenzen erhält man dann eine Kennlinie der Phasendifferenz über der Frequenz. Die Maxima, Minima und Nullstellen der Kennlinie entsprechen dabei bestimmten Werten für $\Delta\varphi$:

Maximum: $\Delta\varphi = 2\pi$
Minimum: $\Delta\varphi = \pi$

Nullstellen: $\Delta\varphi = \frac{1}{2}\pi$ bzw. $\Delta\varphi = \frac{3}{2}\pi$

Damit kann man mittels Gl.(4) die Entfernung aus der Lage des Maximums, des Minimums oder der Nullstellen der Kennlinie $U_d$ über der Frequenz bestimmen. Es gilt daher für die Entfernung:

im Maximum: $d = \dfrac{c}{2 \cdot f_{max}}$

im Minimum: $d = \dfrac{c}{4 \cdot f_{min}}$

Nullstellen: $d = \dfrac{c}{8 \cdot f_{Null1}}$ bzw. $d = \dfrac{3 \cdot c}{8 \cdot f_{Null2}}$

Somit läßt sich die Entfernung durch Minima, Maxima oder Nullstellensuche in der Kennlinie $U_d$ über $f_i$ gewinnen. Dabei kann bevorzugt die Genauigkeit durch Interpolation zwischen den diskreten Frequenzwerten erhöht werden.

e) Frequency Modulated Continuous Wave (FMCW) Verfahren

Die oben aufgeführten frequenzmodulierten Auswerteverfahren sind nicht mehrzielfähig. Dies kann durch die Anwendung eines FMCW- ("Frequency Modulated Continuous Wave")-Verfahrens gelöst werden.

PMD-Bauelemente eignen sich auf Grund ihrer Funktion als Mischer auch zur Messung der Geschwindigkeit mittels eines FMCW-Verfahrens. Dabei wird die radiale Geschwindigkeit $v_d$ eines Objekts relativ zum PMD-Sensor erfaßt. In vielen Anwendungen ist die gleichzeitige Messung von Entfernung d und Geschwindigkeit $v_d$ gewünscht. Die Methode, die Geschwindigkeit aus den Differenzwerten nacheinander aufgenommener Entfernungsbilder zu bestimmen, ist dabei häufig zu langsam und ungenau.

Somit steht neben dem Entfernungswert in jedem PMD-Pixel vorteilhafterweise auch der Geschwindigkeitswert zur Verfügung. Hinzu kommt die Erhöhung der Genauigkeit bei der Entfernungsmessung von bewegten Objekten, da der geschwindigkeitsbedingte Anteil in Gl. (6) berücksichtigt wird.

Des weiteren ist das FMCW Verfahren mehrzielfähig, was neben der Erkennung hintereinander liegender Ziele den Vorteil der geringeren Störung durch weitere Ziele bietet.

Das FMCW Verfahren kann ebenfalls mit integrierenden und, aufgrund des besseren Rausch-zu-Signal-Abstands bevorzugt, mit nicht-integrierenden PMDs realisiert werden.

f) Frequency Stepped Continuous Wave (FSCW) Verfahren

Bei Verwendung integrierender PMDs kann anstelle eines kontinuierlichen Sweeps das FSCW- Verfahren zum Einsatz kommen. Wie bereits zuvor beim n-FSK-Verfahren werden nacheinander entweder die Werte des Differenzsignals $U_d$ oder die Ausgangssignale $U_a, U_b$ für verschiedene Frequenzwerte aufgenommen. Dabei wird bevorzugt ausgehend von einer niedrigen Startfrequenz $f_0$, z.B. 1 MHz, die Frequenz sukzessive um einen konstanten Betrag $\Delta f$ erhöht. Für die so aufgenommenen Werte gilt in Abwandlung von Gl.(3) und (4), bei Annahme nur eines Signallaufwegs und einer Verzögerung nur durch die Laufzeit Sender-PMD ($\Delta\varphi = \Delta\varphi_{tof}$):

$$U_{di} = \kappa \cdot P_M \cdot \cos(\Delta\varphi_{tof}) = \kappa \cdot P_M \cdot \cos(2 \cdot \pi \cdot (f_0 + i \cdot \Delta f) \cdot \tau) \qquad (15)$$

Die Ableitung der Phase entspricht dann der Mischsignalfrequenz $\omega$, der sogenannten Beatfrequenz. Es gilt dann für N Meßwerte und unter Verwendung der gesamten Bandbreite

$$\Delta f_g = N \cdot \Delta f : \quad \omega = \frac{\partial}{\partial i} \Delta\varphi_{tof}(i) = \frac{1}{2\pi} \cdot \frac{\Delta\omega_g}{N} \cdot \tau \;.$$ Die Laufzeit bzw. Entfernung ergibt sich dann als: $\tau = (N/$

$\Delta f_g) \cdot f$ bzw. $di = (c \cdot N)/(2 \cdot \Delta f_g) \cdot f$. Ordnet man alle N Werte hintereinander in einem Vektor an und berechnet die Fouriertransformation, dann erhält man das Spektrum der Meßreihe. Die Laufzeit bzw. Entfernung ist daraus aus der Lage des Maximum im Fourierspektrum bestimmbar. Liegen entgegen der ursprünglichen Annahme mehrere Signallaufwege vor, dann treten statt einem mehrere Maxima im Spektrum auf. Die Lage der entsprechenden Maxima gibt dann die Laufzeit/ Entfernung des jeweiligen Signalweges an.

Das FSCW-Verfahren mit Fourierauswertung ermöglicht vorteilhafterweise mehrzielfähigen Betrieb von PMD-Bauelementen. Wie bereits zuvor kann die Genauigkeit durch Interpolation zwischen den diskreten Frequenzwerten erhöht werden.

Die Bestimmung der Entfernung über die Frequenzen des heruntergemischten Signals kann anstelle der FFT auch mit anderen Methoden bekannten Methoden zur Spektralanalyse erfolgen, z.B. AR, ARMA, oder einem Prony-Verfahren. Der Stand der Technik ist hier z.B. in Steven M. Kay: "Modern Spectral Estimation ", 1988, PTR Prentice Hall, New Jersey, gegeben.

Eine besonders einfache Anwendung ergibt sich für das FSCW Verfahren: Hier lässt sich Gl. (12) für mehrere Zielobjekte {Q} erweitern und umformulieren zu:

$$U_{di} = \sum_{k=1}^{Q} K \cdot P_{M_k} \cdot C_{ik} = \sum_{k=1}^{Q} a_k \cdot y_k(i)$$

Diese Gleichungsform wird als "Linear Prediction Equation" bezeichnet, und läßt sich für die hier angenommenen periodischen Signale mit den gängigen Methoden zur Spektralanalyse lösen.

Um die durch die Spektralanalyse, z.B. FFT, begrenzte Auflösung zu erhöhen oder auch die Rechenzeit zu reduzieren, kann das FSCW-Verfahren in einer Erweiterung des n-FSK Verfahrens nach Ybarra et al., "Optimal Signal Processing of Frequency - Stepped CW Radar Data" IEEE Transactions on Microwave Theory and Techniques, Vol. 43, No. 1, Jan. 1995, verwendet werden. Dadurch können zusätzlich mehrere hintereinanderliegende Ziele aufgelöst werden. Dazu nimmt man Q reflektierende Objekte {Q} an und erhält so ein Gleichungssystem für alle N Frequenzen. Der Vorteil sind je nach gewähltem System entweder die bessere Auflösung oder der geringere Rechenaufwand. Dieser ursprünglich für Mikrowellensysteme entwickelte Algorithmus ist dabei direkt für das PMD implementierbar.

In den folgenden Ausführungsbeispielen wird der frequenzmodulierte Betrieb eines PMD schematisch näher erläutert.

Fig. 1     zeigt ein typisches Ausgangs- und Resetsignal eines PMD-Elementes nach dem Stand der Technik,

Fig. 2     zeigt eine Anordnung zur Bestimmung der Phasenverschiebung mittels eines PSK-Verfahrens nach dem Stand der Technik,

Fig. 3     zeigt eine Anordnung unter Verwendung eines PMD im monofrequenten frequenzmodulierten Betrieb,

Fig. 4     zeigt eine Anordnung unter Verwendung eines PMD im 2-Frequenz-Verfahren,

Fig. 5     zeigt eine weitere Anordnung unter Verwendung eines PMD im 2-Frequenz-Verfahren,

Fig. 6     zeigt ein zu Fig. 5 entsprechende Systemkonzept mit Integration in ein CMOS-PMD-Pixel

Fig. 7     zeigt eine Anordnung unter Verwendung eines nichtintegrierenden PMD im FMCW-Verfahren,

Fig. 8     zeigt eine Anordnung unter Verwendung eines integrierenden PMD im FMCW-Verfahren,

Fig. 9     zeigt ein Timing der Signale und des Samplings des Differenzsignals $U_d$ beim FMCW-Verfahren,

Fig. 10     zeigt ein linear an- und - abfallendes Rampensignal zur Ansteuerung beim FMCW-Verfahren,

Fig. 11     zeigt ein typisches Spektrum beim FMCW-Verfahren,

Fig. 12     zeigt den Ablauf eines FSCW-Verfahrens.

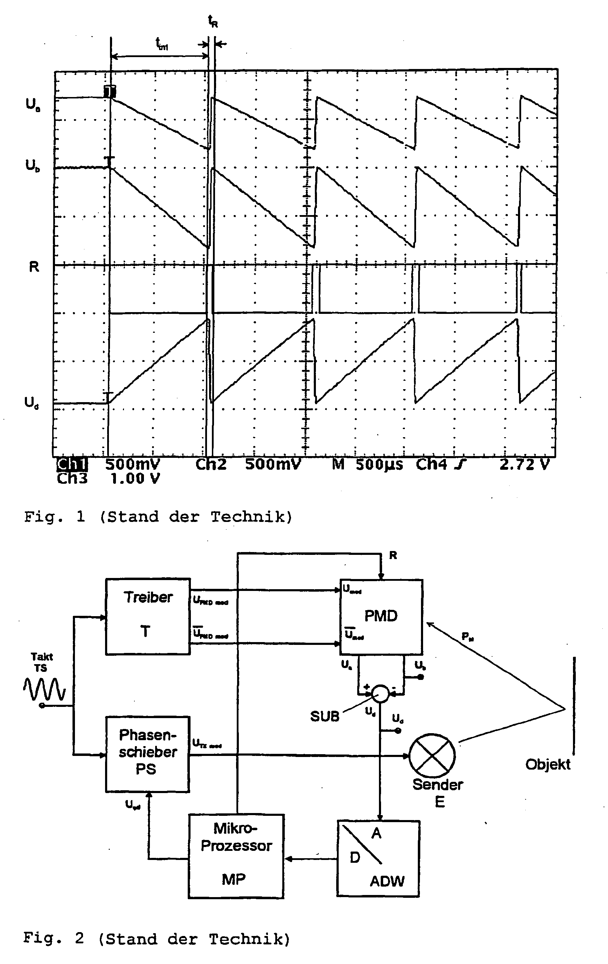

In Figur 1 sind als Stand der Technik die Ausgangsignale $U_a$ und $U_b$ eines PMD, das Differenzsignal $U_d$ sowie das Resetsignal R des Mikroprozessors MP in V aufgetragen gegen die Zeit t in $\mu$s für ein integrierendes PMD-Element nach Schwarte et al. aufgetragen. Die Ausgangsignale $U_a$ und $U_b$ sind abschnittsweise linear von einer Zeitdauer $t_{int}$ und werden durch das Resetsignal R der Zeitdauer $t_R$ zurückgesetzt. Figur 2 zeigt zum Stand der Technik gehörig als Schaltskizze nach Heinol et al. eine Anordnung zur Bestimmung der Phasenverschiebung mittels eines PSK-Verfahrens.

Dabei werden ein Phasenschieber PS und ein Treiber T mittels eines Taktsignal TS, der typischerweise von einem Taktgeber generiert wird, getaktet. Der Treiber leitet das Modulationssignal $U_{PMD\,mod}$ und das um 180° phasenverschobene Modulationssignal $\overline{U}_{PMD\,mod}$ an das PMD weiter. Vom PMD werden entsprechend u. a. der Leistung $P_M$ der einfallenden Welle die Ausgangssignale $U_a$ und $U_b$ erzeugt. Das zugehörige Differenzsignal $U_d$ kann entweder digital ermittelt werden, oder bevorzugt mittels eines, bevorzugt analogen, Subtrahierers SUB. Dieser Subtrahierer SUB kann zudem in das PMD-Pixel integriert werden. Das Differenzsignal $U_d$ wird über einen A/D-Wandler ADW in einen Mikroprozessor MP eingegeben, der u. a. abhängig vom Wert von $U_d$ sowohl das Resetsignal R an das PMD weitergibt als auch das Phasensignal $U_{\varphi d}$ an den Phasenschieber PS. Der Sender E, bevorzugt ein Laser, wird über das für ihn bestimmte Modulationssignal $U_{TX\,mod}$ vom Phasenschieber PS angesteuert. $U_{PMD\,mod}$ und $U_{TX\,mod}$ unterscheiden sich lediglich zur Anpassung an die angesteuerten Geräte in ihrer Signalhöhe.

Der technische Aufwand zur Erzeugung einer entsprechend genauen und einfach einstellbaren Phasenverzögerung ist dabei beträchtlich, so wird z.B. in Heinol et al. die Phasenverzögerung mittels direkter digitaler Frequenzsynthese ("DDS") und digitalem Phasenregister erzeugt.

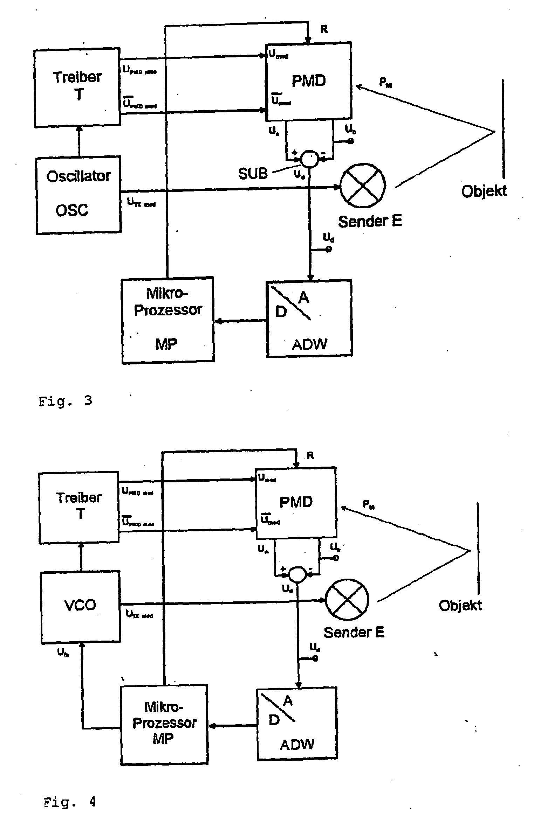

Figur 3 zeigt als Schaltskizze eine Anordnung unter Verwendung eines PMD, der monofrequent betrieben wird.

Ein Oszillator OSC sendet ein Modulationssignal $U_{mod}$ mit einer konstanten Modulationsfrequenz $f_{mod}$. Sein Ausgangssignal $U_{TX\,mod}$ wird vom Sender E intensitätsmoduliert gesendet und gelangt gleichzeitig über den Treiber T, als $U_{PMD\,mod}$ auf das PMD. Dort wird es analog zu Figur 2 überlagert. Das Differenzsignal $U_d$ wird direkt vom A/D-Wandler abgetastet und im Mikroprozessor MP abgelegt. Dort erfolgt sodann eine Spektralanalyse zur Bestimmung der Dopplerfrequenz und die Berechnung der Phase. Auch wird ggf. bei integrierendem PMD, dem sinnvollerweise ein Differenzierer nachgeschaltet sein sollte, ein Resetsignal R vom Mikroprozessor MP zum PMD gesendet.

Figur 4 zeigt eine mögliche Schaltanordnung zum Betrieb einer PMD-Anordnung im 2-Frequenz-Verfahren.

Zuerst wird ein von einem spannungsgesteuerten Oszillator VCO erzeugtes periodisch, insbesondere sinusförmig, intensitätsmoduliertes Signal mit Modulationsfrequenz $f_1$ vom Sender E, typischerweise einer Lichtquelle, gesendet. Zudem wird dieses Signal einem spannungsgesteuerten Oszillator VCO über den Treiber T als Modulationssignal auf das PMD gegeben. Dort wird das empfangene Signal $P_M$ mit dem Modulationssignal $U_{mod}$ wie bereits beschrieben überlagert. Die Differenzspannung $U_d$ wird im Zeitbereich mittels des A/D- Wandlers ADW ausreichend schnell, d.h. mindestens mit dem zweifachen der maximal erwarteten Dopplerfrequenz, abgetastet und vom Mikroprozessor MP gespeichert.

Nun wird eine zweite Frequenz $f_2$ eingestellt, und der sich dabei ergebende Wert $U_{d2}$ aufgenommen. Für beide Meßreihen bestimmt man die Dopplerfrequenz $f_d$ mittels Spektralanalyse. Die Entfernung ergibt sich wiederum aus der Phase des Dopplersignals. Dabei wird die niedrige Frequenz $f_2$ zum Erreichen eines möglichst großen Eindeutigkeitsbereichs verwendet, die höhere Frequenz $f_1$ dient dem Erzielen einer guten Genauigkeit. Alternativ kann man auch die beiden Phasen direkt mittels eines "Least Square Fit" bestimmen.

Die in dieser Figur dargestellte Vorrichtung ist auch zum Betrieb in einer statischen Meßsituation geeignet. Für den Betrieb in statischen Meßsituationen werden bevorzugt PMDs mit integrierendem Ausleseverfahren verwendet.

Beispielsweise wird zuerst ein sinusförmig intensitätsmoduliertes Signal der mit einer ersten Modulationsfrequenz $f_1$ vom Sender E gesendet und zudem als Modulationssignal $U_{mod}$ auf das PMD gegeben. Dort wird das empfangene Signal $P_M$ mit dem Modulationssignal $U_{mod}$ überlagert, und das Differenzsignal $U_{d1}$, das sich für die Differenzspannung $U_d$ nach Ablauf der Integrationszeit $t_{int}$ ergibt, vom Mikroprozessor MP gespeichert. Nun wird eine zweite, niedrigere Modulationsfrequenz $f_2$ eingestellt, und der sich für diese Frequenz ergebende Wert $U_{d2}$ wird ebenfalls gespeichert.

Bevorzugt wird die niedrigere Modulationsfrequenz $f_2$ so gewählt, daß sich der gewünschte Meßbereich $d_w$ eindeutig vermessen läßt. Es ergibt sich bei einem Eindeutigkeitsbereich von $\pi/2$ dann $f_2 = (\pi/4)\cdot(c/d_w)$. Man erhält so zwei Werte für Gl. (3).

Entweder kann dann die Entfernung für beide Modulationsfrequenzen $f_1, f_2$ getrennt bestimmt werden, was bei anschließender Kombination der Werte eine höhere Genauigkeit bei größerem Eindeutigkeitsbereich ermöglicht.

Eine andere Auswertung ist die Division der Differenzsignale $U_{d1}$, $U_{d2}$. Unter Voraussetzung gleicher Signalamplitude und Integrationszeit erhält man Gl. (7). Die so entstandene Funktion hängt nur von der Laufzeit ab, sie allerdings ist nicht geschlossen analytisch lösbar. Somit wird bevorzugt eine Nachschlagetabelle (Look-up-table) der für die eingestellten Frequenzen im Mikroprozessor abgelegt. Dabei reicht der eindeutige Laufzeitbereich über eine Viertelperiode (T/4) der größeren Frequenz. Bei einer Anwendung des Verfahrens wird z. B. der Koeffizient der Meßwerte $U_{d1}/U_{d2}$ gebildet, und dann im Look-up-table diejenige Laufzeit $\tau$ ermittelt, die dem Koeffizienten entspricht.

Insbesondere günstig ist die Wahl von $f_1 = 2\cdot f_2$, da in diesem Fall die Gl.(7) analytisch nach $\tau$ auflösbar ist. Unter Verwendung von $k = U_{d1}/U_{d2}$ gilt:

$$\frac{U_{d1}}{U_{d2}} = \frac{\cos(2\omega_2 \cdot \tau)}{\cos(\omega_2 \cdot \tau)} \Leftrightarrow k \cdot \cos(\omega_2 \cdot \tau) - \cos(2\omega_2 \cdot \tau) = 0$$

Durch Anwenden der Additionstheoreme erhält man:

$$k \cdot \cos(\omega_2 \cdot \tau) = 2 \cdot \cos^2(\omega_2 \cdot \tau) - 1 \Leftrightarrow \cos^2(\omega_2 \cdot \tau) - \frac{k}{2} \cdot \cos(\omega_2 \cdot \tau) - 1 = 0 \qquad .$$

Somit ergibt sich die analytische Lösung der Laufzeit $\tau$:

$$\tau = \frac{1}{2\pi f_1} \cdot \arccos\left( \frac{k}{4} \pm \sqrt{\frac{k^2}{16} + 1} \right)$$

Diese Gleichung wird dann im Mikroprozessor an Stelle des Look-up-tables gelöst, der benötigte Speicherplatz wird frei.

Die in dieser Figur beschriebene Anordnung ist auch geeignet zur Verwendung eines rechteckmodulierten 2-FSK-Verfahrens. Dazu ist der spannungsgesteuerte Oszillator (VCO) als Rechteckoszillator ausgebildet. Beim Betrieb wird somit ein rechteckförmiges Signal bestimmter Modulationsfrequenz $f_1$ von der Lichtquelle gesendet und als Modulationssignal auf das PMD gegeben. Die zweite Frequenz $f_2$ wird bevorzugt in der gleichen Größenordnung wie $f_1$ eingestellt. Aus den zwei gespeicherten Frequenzen ergibt sich die Laufzeit zu:

$$\tau = \frac{(U_{d1} - U_{d2})}{4 \cdot (U_{d1} \cdot f_2 - U_{d2} \cdot f_1)} \qquad\qquad (9)$$

Ebenfalls geeignet ist die Anordnung zur Durchführung eines n-FSK-Verfahrens, z. B. mit sinusförmigem oder rechteckigem Modulationssignal.

Auch ist die Anordnung aus dieser Figur geeignet, mittels eines Frequenz-Kennlinien-Verfahrens betrieben zu werden.

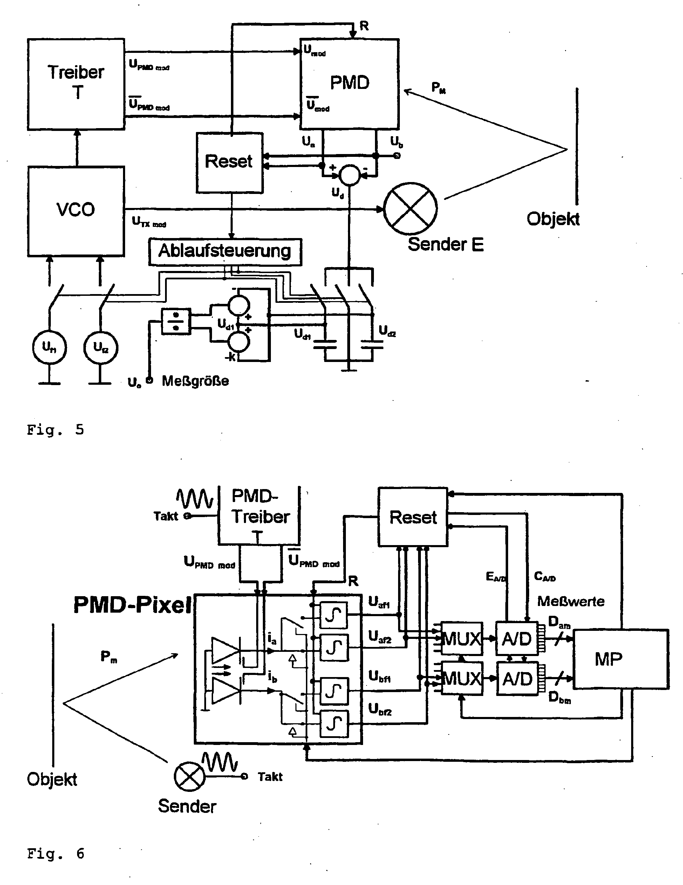

Figur 5 zeigt als Schaltskizze ein weiteres PMD-System, insbesondere zur Anwendung des 2-FSK-Verfahrens. Die beiden Frequenzen $f_1$ und $f_2$ sind bekannt, somit ist auch $k = f_2/f_1$ bekannt.

Somit läßt sich z. B. die Laufzeit τ nach Gl. (10) bestimmen. Diese Anordnung bietet den Vorteil, daß der zweite Bruch in Gl.(10) direkt analog realisiert ist. Die Anordnung liefert dann ein analoges Spannungssignal direkt proportional zur Laufzeit τ, da der erste Bruch lediglich einen konstanten Faktor darstellt. Die Notwendigkeit eines Mikroprozessors MP wie in Fig. 4 entfällt.

Auch kann die analoge Auswerteschaltung für Gl.(10) bevorzugt direkt in das PMD integriert werden. An Stelle des spannungsgesteuerten Oszillators VCO kann zudem ein mit Festfrequenzgenerator LO treten, dessen Ausgangfrequenz mit einem Teiler heruntergeschaltet wird. Entsprechende Teiler sind Stand der Technik und u.a. in U. Tietze, T. Schenk, "Halbleiter-Schaltungstechnik", Kapitel 10, S 232 ff, zehnte Auflage, Springer Verlag Berlin, beschrieben. Zudem sind integrierte Frequenzteiler erhältlich.

In den Figuren 4 und 5 kann der Oszillator auch durch einen DDS-Baustein ersetzt werden

Figur 6 zeigt als Schaltanordnung ein Systemkonzept zur Integration einer PMD-Schaltung gemäß Figur 5 in ein CMOS-PMD-Pixel.

Zu Beginn der Messung ist die erste Frequenz $f_1$ eingestellt. Die entstehenden Ladungsträger fließen in die jeweiligen Integratoren. Nach einer bestimmten Zeitspanne wird auf die Frequenz $f_2$ umgeschaltet. Gleichzeitig werden auch die Integratoren umgeschaltet, so dass die Ladungsträger nun in einen zweiten Integrator fließen. Die Werte der jeweils zwei zugehörigen Integratoren dann am Ende der zweiten Integrationsperiode ausgelesen und die Integratoren mittels des Resetsignals R zurückgesetzt. Falls eine Reduzierung der Auslesezeit wünschenswert ist, kann auch der erste Integrator während der zweiten Integrationsphase bereits ausgelesen werden.

Insbesondere günstig ist die Integration der Schaltung aus Fig. 5 direkt in das PMD-Pixel. Dann steht in jedem Pixel ein analoger, zur Laufzeit τ proportionaler Spannungswert zur Verfügung. Dadurch kann insbesondere eine bei größeren Pixelzahlen aufwendige Nachbearbeitung; z.B. die digitale Subtraktion der beiden Werte, entfallen. Zudem steht bereits nach einer Messung ein Entfernungssignal zur Verfügung. Vorteilhaft ist dabei insbesondere die Ausnutzung der vorhandenen Integrationskapazität als "Sample und Hold"-Tor.

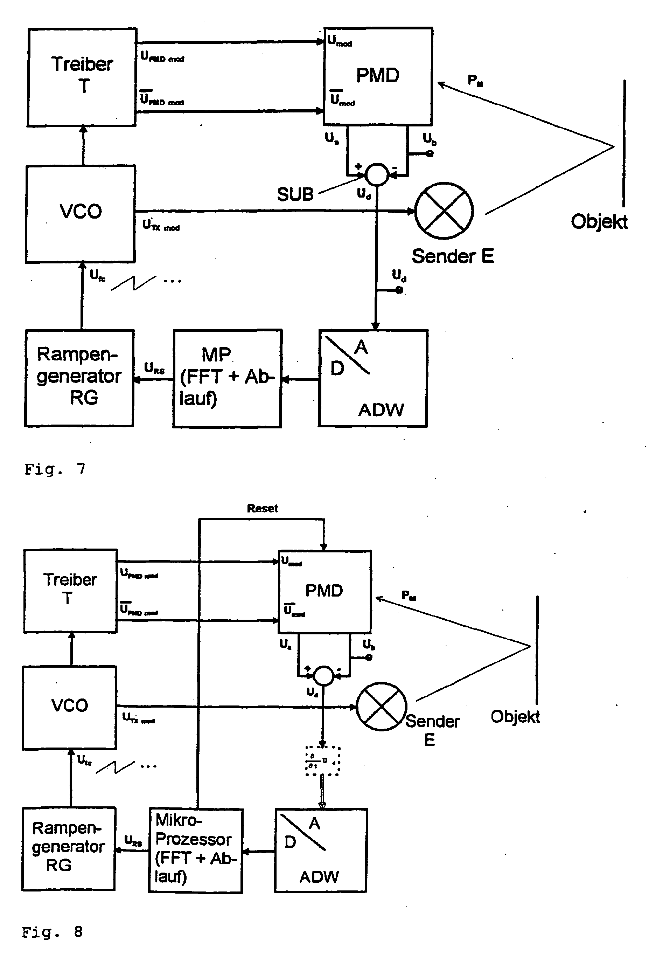

Die Anordnungen nach Fig. 4, 5 und 6 können günstigerweise um einen Verstärker mit schaltbarer Verstärkung erweitert werden, um bei kleinen Signalen den Dynamikbereich des A/D-Wandlers voll auszunutzen. Figur 7 zeigt als Schaltbild eine Anordnung zur Ansteuerung eines PMD mittels eines FMCW-Verfahrens, wobei PMD-Elemente mit nicht-integrierendem Ausgang verwendet werden.

Entweder durch den Mikroprozessor MP oder bevorzugt durch den Rampengenerator RG wird ein linear ansteigendes Rampensignal $U_{fc}$ erzeugt. Das Rampensignal $U_{fc}$ wird auf den VCO gegeben und stimmt diesen, ausgehend von der Grundfrequenz, über eine Bandbreite $\Delta f_g$ durch. Das frequenzmodulierte Ausgangssignal des VCO wird vom Sender E gesendet und über den PMD-Treiber T als Modulationssignal auf das PMD gegeben. Dort wird es in oben beschriebener Weise mit dem empfangenen Signal überlagert. Für das Mischsignal $U_{di}$ gilt mit den entsprechenden Zeitwerten t und der Rampendauer T:

$$U_{di} = K \cdot P_M \cdot \cos(\Delta\varphi_{tof}) = K \cdot P_M \cdot \cos\left(2 \cdot \pi \cdot \left(f_0 + t \cdot \frac{\Delta f_g}{T}\right) \cdot \tau\right) \qquad (14)$$

Es ergibt sich die Laufzeit/Entfernung als Frequenzinformation gemäß $\tau = (T/\Delta f_g) \cdot f$ bzw. $d_i = (c \cdot T/(2\Delta f_g)) \cdot f$. Die Auswertung der Frequenzinformation kann dann mit den bekannten Verfahren für FMCW-Radarsysteme (FFT, ARMA oder Zeitbereichsverfahren) erfolgen. Der Stand der Technik zur Spektralanalyse ist für die FFT z. B. in A. Oppenheim, W. Schäfer: "Discrete-Time Signal Processing", 1989, Prentice Hall, Englewood Cliffs, wiedergegeben, für ARMA und Pronyverfahren z. B. in S. Kay oder S.L. Marple: "Digital Spectral Analysis with Applications", 1988, Prentice Hall Englewoods Cliffs, für Zeitbereichsverfahren z. B. in DE 19736693.

Alle Spektralanalyseverfahren bilden die mittleren Frequenzen aus allen Meßpunkten, somit ist das erfindungsgemäß bevorzugte Weglassen des Integrators ohne Einbußen beim Signal/Rausch-Verhältnis möglich.

Dazu wird das Mischsignal mittels eines schnellen A/D-Wandlers (ADW) direkt sequentiell digitalisiert. Dabei muß die Abtastfrequenz nach Abtasttheorem so gewählt werden, das sie dem doppelten Wert der maximalen Frequenz des Mischsignals entspricht: $f_i = 2 \cdot (T/\Delta f_g) \cdot \tau_{max}$. Dabei ist $\tau_{max}$ die größte zu messende Laufzeit, d.h. der Meßbereich legt die notwendige Tastfrequenz fest. Für ein typisches Entfernungsmeßgerät für Entfernungen von 0-10 m ergibt sich bei einer Rampendauer von 10 ms und einer Bandbreite von 100 MHz eine Grenzfrequenz von ca. 1,3 kHz.

Die FMCW-Verfahren für PMD-Pixel lassen sich vorteilhafterweise dahingehend erweitern, daß an Stelle einer einfachen ansteigenden Rampe ein zuerst linear ansteigende und dann linear abfallende Rampe als Steuersignal verwendet wird. Dies ermöglicht bei einer Auswertung neben der Entfernungsmessung die gleichzeitige Messung der Geschwindigkeiten über den Dopplereffekt. Dabei wird in Gl. (6) die gesendete Frequenz um die sogenannte Dopplerfrequenz $f_d$ verschoben, siehe z. B. E. Pehl.

Das Meßprinzip ist dabei wie folgt: Während der steigenden Rampe entspricht die Frequenz des heruntergemischten Signals der Summe aus dem durch die Laufzeit verursachten Frequenzanteil $f_e$ und dem durch die Radialgeschwindigkeit verursachten Frequenzanteil $f_d$. Während der fallenden Rampe hingegen wird die Frequenz des heruntergemischten Signals durch die Differenz aus dem durch die Laufzeit verursachten Frequenzanteil $f_e$ und dem durch die Radialgeschwindigkeit verursachten Frequenzanteil $f_d$ gebildet.

Figur 8 zeigt als Schaltskizze eine Anordnung zum FMCW-Betrieb integrierender PMDs.

Der Ablauf der PMD-Steuerung sieht dabei wie folgt aus: Der Mikroprozessor/-kontroller MP initialisiert den Rampengenerator RG. Dieser steuert eine Rampe durch, die als Signal $U_{fc}$ an den Vco weitergeleitet wird, wobei bevorzugt die gesamte Bandbreite zwischen zwei Resetsignal R durchgestimmt wird. Für die in Fig. 1 gezeigten typischen Signale eines zur Zeigt erhältlichen PMDs ergibt sich bei einer Integrationszeit von etwa 1 ms und einer Bandbreite von ca. 100 MHz eine Rampensteigung von 100 GHz/s. Während der Integration wird das Ausgangssignal des PMDs, falls gewünscht, kontinuierlich differenziert. In jedem Fall wird das Ausgangssignal zwischen den beiden Resetsignalen R sequentiell abgetastet und digitalisiert. Nach der Integrationszeit bzw. bei Erreichen des Rampenendes wird das Resetsignal R ausgelöst.

In den beiden Anordnungen nach Fig. 7 und Fig. 8 kann die Kombination aus VCO und Rampengenerator z. B. auch durch einen DDS-Baustein DDS oder einen PLL-("Phase-Lock-Loop")-Synthesizer PLL ersetzt werden, der direkt ein linear ansteigendes Frequenzsignal erzeugt.

Vorteilhaft ist bei den beiden FMCW-Verfahren die wesentlich kürzere Zeit, nach der bereits ein erstes Entfernungsergebnis vorliegt, und die Mehrzielfähigkeit.

Ein weiterer Vorteil liegt in der gleichzeitigen Vermessung von Geschwindigkeit und Entfernung. Dies führt gegenüber dem Stand der Technik zudem zu einer genaueren Vermessung der Entfernung von bewegten Zielen, da bei den Methoden nach dem Stand der Technik die Bewegung der Meßziele systematische Meßfehler erzeugt. Von Nachteil ist der Rechenaufwand für die Spektralanalyse.

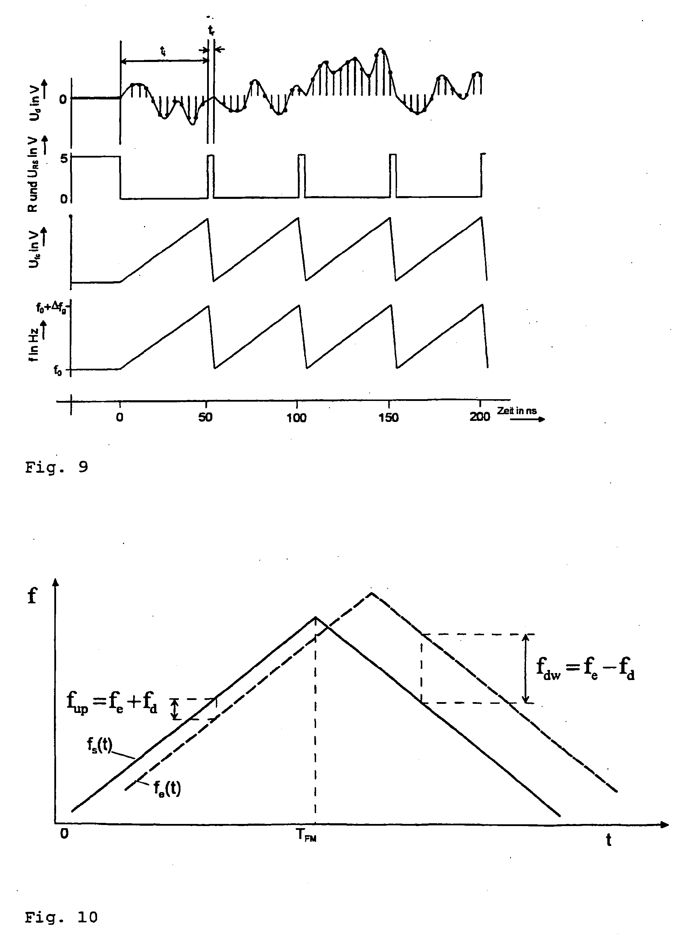

Figur 9 zeigt ein typisches Timing der Signale und des Samplings des Differenzsignals beim FMCW-Verfahren mit integrierendem PMD, z. B. gemäß Figur 8.

Die oberste Reihe zeigt ein typisches Differenzsignal $U_d$ in V, die zweite Reihe das Resetsignal R und $U_{RS}$ in V, die dritte Reihe das Rampensignal $U_{fc}$ in V und die unterste Reihe die Frequenz f des Rampensignals in Hz, jeweils aufgetragen gegen die gleiche Zeitachse.

Figur 10 zeigt eine Auftragung einer Frequenz f gegen die Zeit t für ein zuerst linear ansteigendes und dann linear abfallendes Rampensignal zur Ansteuerung beim FMCW-Verfahren.

Tastet man jetzt wie zuvor das Mischsignal mit dem A/D-Wandler AD ab und führt eine FFT durch, dann weist das Spektrum Maxima an den Stellen $f_{up} = f_e + f_d$ und $f_{dw} = f_e - f_d$ auf. Die Maxima bestimmt man wiederum mit geeigneten Routinen und erhält dann die Entfernung bzw. Geschwindigkeit aus $f_e = 1/2 \cdot (f_{up} + f_{dw})$ und $f_d = 1/2 \cdot (f_{up} - f_{dw})$. Somit können Geschwindigkeit und Entfernung gleichzeitig aus der Aufnahme nur eines Spektrums bestimmt werden.

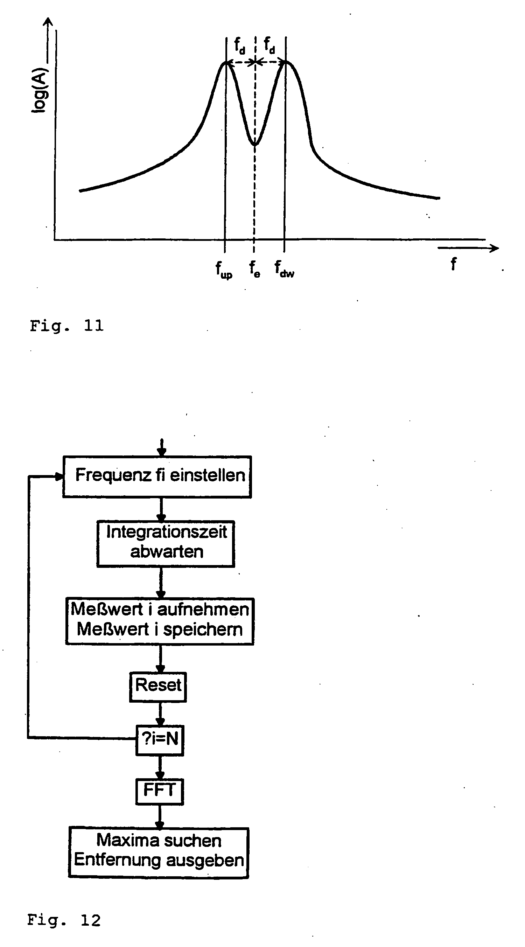

Figur 11 zeigt als logarithmische Auftragung eines Amplitudenwertes A gegen die Frequenz ein typisches Spektrum, das bei einem FMCW-Verfahren mit einem Ansteuerungsverlauf gemäß Figur 10 bestimmt wird.

Figur 12 zeigt als Flussdiagramm den Ablauf eines Algorithmus zur Anwendung des FSCW-Verfahrens bei integrierendem PMD.

Bevorzugt wird, ausgehend von einem niedrigstem Wert, einer Startfrequenz $f_i$ eingestellt, z.B. 1 MHz. Nach Abwarten der Integrationszeit wird der zugehörige Messwert i aufgenommen und gespeichert. Es folgt ein Reset. Dann wird die Frequenz $f_i$ günstigerweise sukzessiv um einen konstanten Betrag $\Delta f$ erhöht und die Messaufnahme für diese Frequenz durchgeführt.

Nach Aufnahme aller N Werte wird eine Spektralanalyse, z.B. eine FFT, durchgeführt, durch die man das Spektralkomponenten der Meßreihe erhält. Die Laufzeit bzw. Entfernung kann sodann aus der Frequenz der Spektralkomponenten bestimmt werden.

**Patentansprüche**

1. Verfahren zur Entfernungs- oder Geschwindigkeitsmessung mittels eines PMD-Systems, bei dem

- ein PMD (PMD) mittels mindestens eines Modulationssignals ($U_{mod}$) mit einer Modulationsfrequenz ($f_{mod}$) und eines dazu komplementären Modulationssignals ($\overline{U}_{mod}$) angesteuert wird,
- ein Sender (E) elektromagnetische Strahlung aussendet, die mittels des mindestens einen Modulationssignals ($U_{mod}$) intensitätsmoduliert wird,

**dadurch gekennzeichnet, dass**

- mindestens ein Ausgangssignal ($U_a$,$U_b$) des PMD (PMD) oder mindestens ein daraus abgeleitetes Signal ($U_d$), insbesondere ein Differenzsignal ($U_d$), aufgenommen wird,
- mittels einer Spektralanalyse, insbesondere einer schnellen Fouriertransformation (FFT), aus dem mindestens einen Ausgangssignal ($U_a$,$U_b$) und/oder dem mindestens einen daraus abgeleiteten Signal ($U_d$) ein Spektrum gebildet wird,
- im Spektrum ein Signalanteil mit signifikanter, insbesondere maximaler, Amplitude bestimmt wird,
- die zugehörige Frequenz ($f_{max}$) ermittelt wird, und
- aus dieser Frequenz ($f_{max}$) des Signalanteils mit signifikanter Amplitude eine Geschwindigkeit berechnet wird.

**2.** Verfahren nach Anspruch 1, bei dem
zusätzlich aus der der Frequenz ($f_{max}$) des Signalanteils mit signifikanter Amplitude zugehörigen Phase ($\varphi_{ges}$) im Spektrum eine dieser Frequenz ($f_{max}$) zugehörige Entfernung bestimmt wird.

**3.** Verfahren zur Entfernungs- oder Geschwindigkeitsmessung zum Betrieb eines PMD-Systems, bei dem

- ein PMD (PMD) mittels mindestens eines Modulationssignals ($U_{mod}$) angesteuert wird,
- ein Sender (E) elektromagnetische Strahlung aussendet, die mittels des mindestens einen Modulationssignals ($U_{mod}$) intensitätsmoduliert wird,

**dadurch gekennzeichnet, dass**
das Modulationssignal ($U_{mod}$) zwischen mindestens zwei Modulationsfrequenzen ($f_1$,$f_2$,$f_i$) variiert wird.

**4.** Verfahren nach Anspruch 3, bei dem
das Modulationssignal ($U_{mod}$) zwischen zwei Modulationsfrequenzen ($f_1$,$f_2$) umgeschaltet wird.

**5.** Verfahren nach Anspruch 4, bei dem
für jede der beiden Modulationsfrequenzen ($f_1$,$f_2$) eine Ermittlung von Geschwindigkeit und/oder Entfernung jeweils getrennt erfolgt, und anschließend die niedrigere Modulationsfrequenz ($f_2$) zur Bestimmung des Eindeutigkeitsbereichs und die höhere Modulationsfrequenz ($f_1$) zur Erhöhung der Genauigkeit verwendet wird.

**6.** Verfahren nach Anspruch 5 zur Ermittlung der Geschwindigkeit für jeweils eine der Modulationsfrequenzen ($f_1$,$f_2$), bei dem

- mindestens ein Ausgangssignal ($U_a$,$U_b$) des PMD (PMD) oder mindestens ein daraus abgeleitetes Signal ($U_d$), insbesondere ein Differenzsignal ($U_d$), aufgenommen wird,
- mittels einer Spektralanalyse, insbesondere einer schnellen Fouriertransformation (FFT), aus dem mindestens einen Ausgangssignal ($U_a$,$U_b$) und/oder dem mindestens einen daraus abgeleiteten Signal ($U_d$) ein Spektrum gebildet wird,
- im Spektrum ein Signalanteil mit signifikanter, insbesondere maximaler, Amplitude bestimmt wird,
- die zugehörige Frequenz ($f_{max}$) ermittelt wird, und aus dieser Frequenz ($f_{max}$) des Signalanteils mit signifikanter Amplitude eine Geschwindigkeit für die jeweils eingestellte Modulationsfrequenz ($f_1$,$f_2$) berechnet wird.

**7.** Verfahren nach Anspruch 5 oder 6 zur Ermittlung der Entfernung für jeweils eine der Modulationsfrequenzen ($f_1$, $f_2$), bei dem aus der der Frequenz ($f_{max}$) des Signalanteils mit signifikanter Amplitude zugehörigen Phase ($\varphi_{ges}$) im Spektrum eine dieser Frequenz ($f_{max}$) zugehörige Entfernung bestimmt wird.

**8.** Verfahren nach Anspruch 4, bei dem
für jede der beiden Modulationsfrequenzen ($f_1$,$f_2$) eine Entfernungsmessung mit einem I-Q-Verfahren oder einem PSK-Verfahren getrennt erfolgt und anschließend die niedrigere Modulationsfrequenz ($f_2$) zur Bestimmung des Eindeutigkeitsbereichs und die höhere Modulationsfrequenz ($f_1$) zur Erhöhung der Genauigkeit verwendet wird.

**9.** Verfahren nach Anspruch 4, bei dem
eine Entfernungsbestimmung mittels eines Koeffizienten $U_{d1}$/$U_{d2}$ durchgeführt wird, insbesondere unter Verwendung eines Look-up-Table oder einer analytischen Bestimmung der Laufzeit ($\tau$).

**10.** Verfahren nach einem der Ansprüche 4 bis 9, bei dem
das Modulationssignal ($U_{mod}$) zwischen mehr als zwei Modulationsfrequenzen ($f_1$,$f_2$,$f_i$) umgeschaltet wird.

**11.** Verfahren nach Anspruch 10, bei dem
eine Bestimmung einer Laufzeit ($\tau$) mittels einer Least-Square-Fit-Methode durchgeführt wird.

**12.** Verfahren nach einem der Ansprüche 4 bis 11, bei dem
das Modulationssignal ($U_{mod}$) periodisch, insbesondere sinusförmig, amplitudenmoduliert wird.

**13.** Verfahren nach einem der Ansprüche 4 bis 12, bei dem
die niedrigere Modulationsfrequenz ($f_2$) entsprechend dem Meßbereich $d_w$ nach Gleichung

$$f_2 = (\pi/4) \cdot (c/d_w)$$

gewählt wird, wobei c der Wellengeschwindigkeit entspricht.

**14.** Verfahren nach Anspruch 13, bei dem
die höhere Modulationsfrequenz ($f_1$) und die niedrigere Modulationsfrequenz ($f_2$) in einer Beziehung $f_1 = 2 \cdot f_2$ zueinander stehen.

**15.** Verfahren nach einem der Ansprüche 4 bis 14, bei dem
das Modulationssignal ($U_{mod}$) rechteckförmig amplitudenmoduliert wird.

**16.** Verfahren nach Anspruch 3, bei dem

- die Modulationsfrequenz ($f_1, f_2, f_i$) unter Verwendung eines Frequenz-Kennlinien-Verfahrens variiert wird, und
- eine Entfernungsmessung mittels einer Bestimmung mindestens eines charakteristischen Punkts, insbesondere von Nullstellen oder Extrema, erfolgt.

**17.** Verfahren nach Anspruch 3, bei dem

- die Modulationsfrequenz ($f_1, f_2, f_i$) unter Verwendung eines FMCW-Verfahrens kontinuierlich variiert wird,
- eine Spektralanalyse mindestens eines Ausgangssignals ($U_a, U_b$) des PMD (PMD) und/oder mindestens eines daraus abgeleiteten Signals ($U_d$), insbesondere eines Differenzsignals ($U_d$) durchgeführt wird,
- anschließend eines oder mehrere Maxima im durch die Spektralanalyse resultierenden Spektrum gesucht werden,
- eine Geschwindigkeit oder/und eine Entfernung aus der zugehörigen Frequenz mindestens eines Maximums berechnet wird.

**18.** Verfahren nach Anspruch 3, bei dem

- die Modulationsfrequenz ($f_1, f_2, f_i$) unter Verwendung eines FSCW-Verfahrens in diskreten Schritten bekannten Abstands variiert wird
- eine Spektralanalyse mindestens eines Ausgangssignals ($U_a, U_b$) des PMD (PMD) und/oder mindestens eines daraus abgeleiteten Signals ($U_d$), insbesondere eines Differenzsignals ($U_d$) durchgeführt wird,
- anschließend eines oder mehrere Maxima im durch die Spektralanalyse resultierenden Spektrum gesucht werden,
- eine Geschwindigkeit oder/und eine Entfernung aus der zugehörigen Frequenz mindestens eines Maximums berechnet wird.

**19.** Anordnung zum Betrieb eines PMD-Systems, aufweisend

- mindestens einen PMD (PMD),
- mindestens einen Sender (E),
- mindestens einen Signalgenerator (OSC,LO,DDS,VCO,PLL), mittels dessen ein Modulationssignal ($U_{mod}$) an den PMD (PMD) und an den Sender (E) gesendet werden kann,

**dadurch gekennzeichnet, dass**
mittels des Signalgenerators (OSC,LO,DDS,VCO,PLL) das Modulationssignal ($U_{mod}$) wahlweise zwischen minde-

stens zwei Moduationsfrequenzen ($f_1, f_2, f_i$) schaltbar ist.

20. Anordnung nach Anspruch 19, bei der
der Sender (E) mindestens einen Laser, eine LED, eine Quecksilberdampflampe, eine Leuchtstoffröhre oder einen Mikrowellensender aufweist.

21. Anordnung nach einem der Ansprüche 19 oder 20, bei der der Signalgenerator einen Oszillator (OSC), insbesondere einen spannungsgesteuerten Oszillator (VCO) oder einen Festfrequenzoszillator (LO), oder einen PLL-Synthesizer (PLL) oder einen DDS-Baustein aufweist.

22. Anordnung nach einem der Ansprüche 19 bis 21, bei der das PMD (PMD) über einen A/D-Wandler (ADW) mit einem Mikroprozessor (MP) verbunden ist.

23. Anordnung nach einem der Ansprüche 19 bis 22, bei der im PMD (PMD) mindestens zwei Sample-and-Hold-Tore integriert sind, in denen mindestens ein Ausgangssignal ($U_a, U_b$) des PMD (PMD) oder mindestens ein daraus abgeleitetes Signal ($U_d$), insbesondere ein Differenzsignal ($U_d$), gespeichert wird, welche wechselnd in Abhängigkeit von den eingestellten Modulationsfrequenzen ($f_1, f_2, f_i$) umschaltbar sind.

24. Anordnung nach Anspruch 23, bei der
zwei Sample-and-Hold-Tore je Ausleseausgang verwendet werden, die zeitgleich mit dem Umschalten zwischen den Modulationsfrequenzen ($f_1, f_2, f_i$) umschaltbar sind.

25. Anordnung nach Anspruch 24, bei der
mindestens einem Sample-and-Hold-Tor eine analoge Auswerteschaltung nachgeschaltet ist, die entweder extern oder direkt in einen das PMD (PMD) enthaltenden Chip integriert ist.

26. Anordnung nach einem der Ansprüche 19 bis 25, bei der das PMD (PMD) nichtintegrierend ausgeführt ist.

**Claims**

1. Method for distance or speed measurement by means of a PMD system, in the case of which

    - a PMD (PMD) is driven by means of at least one modulation signal ($U_{mod}$) with one modulation frequency ($f_{mod}$) and of a modulation signal ($\overline{U}_{mod}$) complementary thereto, and
    - a transmitter (E) emits electromagnetic radiation that is intensity-modulated by means of the at least one modulation signal ($U_{mod}$),

    **characterized in that**

    - at least one output signal ($U_a, U_b$) of the PMD (PMD) or at least one signal ($U_d$) derived therefrom, in particular a differential signal ($U_d$), is picked up
    - a spectrum is formed by means a spectral analysis, in particular a fast Fourier transformation (FFT), from the at least one output signal ($U_a, U_b$) and/or the at least one signal ($U_d$) derived therefrom,
    - a signal component with a significant, in particular maximum, amplitude is determined in the spectrum,
    - the associated frequency ($f_{max}$) is determined, and
    - a speed is calculated from this frequency ($f_{max}$) of the signal component with a significant amplitude.

2. Method according to claim 1, in which a distance appertaining to the frequency ($f_{max}$) of the signal component with a significant amplitude is additionally determined from the phase ($\varphi_{ges}$) in the spectrum appertaining to this frequency ($f_{max}$).

3. Method for distance or speed measurement for operating a PMD system, in the case of which

    - a PMD (PMD) is driven by means of at least one modulation signal ($U_{mod}$), and
    - a transmitter (E) emits electromagnetic radiation that is intensity-modulated by means of the at least one modulation signal ($U_{mod}$),

**characterized in that** the modulation signal ($U_{mod}$) is varied between at least two modulation frequencies ($f_1, f_2, f_i$).

4. Method according to claim 3, in which the modulation signal ($U_{mod}$) is switched over between two modulation frequencies ($f_1, f_2$).

5. Method according to claim 4, in which speed and/or distance are/is determined separately for each of the two modulation frequencies ($f_1, f_2$), and subsequently the lower modulation frequency ($f_2$) is used to determine the uniqueness range, and the higher modulation frequency ($f_1$) is used to increase the accuracy.

6. Method according to claim 5 for determining the speed for in each case one of the modulation frequencies ($f_1, f_2$), in the case of which

   - at least one output signal ($U_a, U_b$) of the PMD (PMD) or at least one signal ($U_d$) derived therefrom, in particular a differential signal ($U_d$), is picked up
   - a spectrum is formed by means a spectral analysis, in particular a fast Fourier transformation (FFT), from the at least one output signal ($U_a, U_b$) and/or the at least one signal ($U_d$) derived therefrom,
   - a signal component with a significant, in particular maximum, amplitude is determined in the spectrum,
   - the associated frequency ($f_{max}$) is determined, and a speed for the respectively set modulation frequency ($f_1, f_2$) is calculated from this frequency ($f_{max}$) of the signal component with a significant amplitude.

7. Method according to claim 5 or 6 for determining the distance for in each case one of the modulation frequencies ($f_1, f_2$), in the case of which a distance appertaining to the frequency ($f_{max}$) of the signal component with a significant amplitude is determined from the phase ($\varphi_{ges}$) in the spectrum appertaining to this frequency ($f_{max}$).

8. Method according to claim 4, in which distance is measured separately for each of the two modulation frequencies ($f_1, f_2$) with the aid of an I-Q method or a PSK method, and subsequently the lower modulation frequency ($f_2$) is used to determine the uniqueness range, and the higher modulation frequency ($f_1$) is used to increase the accuracy.

9. Method according to claim 4, in which distance is determined by means of a coefficient $U_{d1}/U_{d2}$, in particular by using a lookup table or an analytical determination of the transit time ($\tau$).

10. Method according to one of claims 4 to 9, in which the modulation signal ($U_{mod}$) is switched over between more than two modulation frequencies ($f_1, f_2, f_i$).

11. Method according to claim 10, in which a transit time ($\tau$) is determined by means of a least square fit method.

12. Method according to one of claims 4 to 11, in which the modulation signal ($U_{mod}$) is amplitude-modulated periodically, in particularly sinusoidally.

13. Method according to one of claims 4 to 12, in which the lower modulation frequency ($f_2$) is selected in accordance with the measurement range $d_w$ using the equation $f_2 = (\Pi/4) \cdot (c/d_w)$, c corresponding to the wave velocity.

14. Method according to claim 13, in which the higher modulation frequency (f1) and the lower modulation frequency (f2) are related to one another by $f_1 = 2 \cdot f_2$.

15. Method according to one of claims 4 to 14, in which the modulation signal ($U_{mod}$) is amplitude-modulated rectangularly.

16. Method according to claim 3, in which

   - the modulation frequency ($f_1, f_2, f_i$) is varied by using a frequency characteristic method, and
   - a distance measurement is performed by means of determining at least one characteristic point, in particular zeroes or extremes.

17. Method according to claim 3, in which

   - the modulation frequency ($f_1, f_2, f_i$) is varied continuously by using an FMCW method,
   - a spectral analysis of at least one output signal ($U_a, U_b$) of the PMD (PMD) and/or of at least one signal ($U_d$)

derived therefrom, in particular a differential signal ($U_d$), is carried out,
- subsequently a search is made for one or more maxima in the spectrum resulting from the spectral analysis, and
- a speed or/and a distance is/are calculated from the associated frequency of at least one maximum.

**18.** Method according to claim 3, in which

- the modulation frequency ($f_1$,$f_2$,$f_i$) is varied in discrete steps of known spacing by using an FSCW method,
- a spectral analysis of at least one output signal ($U_a$,$U_b$) of the PMD (PMD) and/or at least one signal ($U_d$) derived therefrom, in particular a differential signal ($U_d$), is carried out,
- subsequently a search is made for one or more maxima in the spectrum resulting from the spectral analysis, and
- a speed or/and a distance is/are calculated from the associated frequency of at least one maximum.

**19.** Arrangement for operating a PMD system, having

- at least one PMD (PMD),
- at least one transmitter (E), and
- at least one signal generator (OSC,LO,DDS,VCO,PLL), by means of which a modulation signal ($U_{mod}$) can be sent to the PMD (PMD) and to the transmitter (E),

**characterized in that** the modulation signal ($U_{mod}$) can optionally be switched between at least two modulation frequencies ($f_1$,$f_2$,$f_i$) by means of the signal generator (OSC,LO,DDS,VCO,PLL).

**20.** Arrangement according to claim 19, in which the transmitter (E) has at least one laser, one LED, one mercury-vapor lamp, one fluorescent tube or one microwave transmitter.

**21.** Arrangement according to one of claims 19 or 20, in which the signal generator has an oscillator (OSC), in particular a voltage-controlled oscillator (VCO) or a fixed-frequency oscillator (LO), or a PLL synthesizer (PLL) or a DDS module.

**22.** Arrangement according to one of claims 19 to 21, in which the PMD (PMD) is connected to a microprocessor (MP) via an A/D converter (ADW).

**23.** Arrangement according to one of claims 19 to 22, in which, in the PMD (PMD), at least two sample-and-hold gates are integrated in which there is stored at least one output signal ($U_a$,$U_b$) of the PMD (PMD) or at least one signal ($U_d$), in particular a differential signal ($U_d$), derived therefrom, that can be switched over alternatingly as a function of the set modulation frequencies ($f_1$,$f_2$,$f_i$).

**24.** Arrangement according to claim 23, in which, for each read-out output, use is made of two sample-and-hold gates that can be switched over simultaneously with the switchover between the modulation frequencies ($f_1$,$f_2$,$f_i$).

**25.** Arrangement according to claim 24, in which there is connected downstream of at least one sample-and-hold gate an analog evaluation circuit that is either external or integrated directly into a chip containing the PMD (PMD).

**26.** Arrangement according to one of claims 19 to 25, in which the PMD (PMD) is of non-integrating design.

**Revendications**

**1.** Procédé de mesure de distance ou de vitesse au moyen d'un système PMD, dans lequel

- un PMD (PMD) est commandé par au moins un signal de modulation ($U_{mod}$) avec une fréquence de modulation ($f_{mod}$), et un signal de modulation complémentaire ($Ü_{mod}$),
- un émetteur (E) émet un rayonnement électromagnétique lequel est modulé en intensité par ledit au moins un signal de modulation ($U_{mod}$),

**caractérisé en ce que**

- on enregistre au moins un signal de sortie ($U_a$, $U_b$) du PMD (PMD) ou au moins un signal dérivé de celui-ci ($U_d$), en particulier un signal différentiel ($U_d$),

- au moyen d'une analyse spectrale, en particulier d'une transformée de Fourier rapide (FFT), on forme un spectre à partir dudit au moins un signal de sortie ($U_a$, $U_b$) et/ou dudit au moins un signal dérivé de celui-ci ($U_d$),
- on détermine dans ledit spectre une composante de signal d'amplitude significative, notamment maximale,
- on détermine la fréquence ($f_{max}$) associée, et
- à partir de cette fréquence ($f_{max}$) de la composante de signal d'amplitude significative, on calcule une vitesse.

2. Procédé selon la revendication 1, dans lequel
on détermine en outre à partir de la phase ($\varphi_{ges}$) associée à la fréquence ($f_{max}$) de la composante de signal d'amplitude significative dans le spectre, une distance associée à cette fréquence ($f_{max}$).

3. Procédé de mesure de distance ou de vitesse permettant de faire fonctionner un système PMD, dans lequel

- un PMD (PMD) est commandé par au moins un signal de modulation ($U_{mod}$),
- un émetteur (E) émet un rayonnement électromagnétique lequel est modulé en intensité par ledit au moins un signal de modulation ($U_{mod}$),

**caractérisé en ce que**
on fait varier le signal de modulation ($U_{mod}$) entre au moins deux fréquences de modulation ($f_1$, $f_2$, $f_i$).

4. Procédé selon la revendication 3, dans lequel
on fait commuter le signal de modulation ($U_{mod}$) entre deux fréquences de modulation ($f_1$, $f_2$).

5. Procédé selon la revendication 4, dans lequel
on réalise séparément, pour chacune des deux fréquences de modulation ($f_1$, $f_2$), un calcul de vitesse et/ou de distance, puis on utilise la basse fréquence de modulation ($f_2$) pour déterminer le domaine d'univocité et la haute fréquence de modulation ($f_1$) pour augmenter la précision.

6. Procédé selon la revendication 5 pour déterminer la vitesse pour à chaque fois une des fréquences de modulation ($f_1$, $f_2$), dans lequel

- on enregistre au moins un signal de sortie ($U_a$, $U_b$) du PMD (PMD) ou au moins un signal dérivé de celui-ci ($U_d$), en particulier un signal différentiel ($U_d$),
- au moyen d'une analyse spectrale, en particulier d'une transformée de Fourier rapide (FFT), on forme un spectre à partir dudit au moins un signal de sortie ($U_a$, $U_b$) et/ou dudit au moins un signal dérivé de celui-ci ($U_d$),
- on détermine dans ledit spectre une composante de signal d'amplitude significative, notamment maximale,
- on détermine la fréquence ($f_{max}$) associée et on calcule à partir de cette fréquence ($f_{max}$) de la composante de signal d'amplitude significative, une vitesse pour la fréquence de modulation ($f_1$, $f_2$) réglée à chaque fois.

7. Procédé selon la revendication 5 ou 6 pour déterminer la distance pour à chaque fois une des fréquences de modulation ($f_1$, $f_2$), dans lequel on détermine à partir de la phase ($\varphi_{ges}$) associée à la fréquence ($f_{max}$) de la composante de signal d'amplitude significative dans le spectre, une distance associée à cette fréquence ($f_{max}$).

8. Procédé selon la revendication 4, dans lequel
on réalise séparément, pour chacune des deux fréquences de modulation ($f_1$, $f_2$), une mesure de distance à l'aide d'un procédé I-Q ou d'un procédé PSK, puis on utilise la basse fréquence de modulation ($f_2$) pour déterminer le domaine d'univocité et la haute fréquence de modulation ($f_1$) pour augmenter la précision.

9. Procédé selon la revendication 4, dans lequel
on réalise une détermination de distance au moyen d'un coefficient $U_{d1}/U_{d2}$, en particulier à l'aide d'une table de consultation ou d'une détermination analytique du temps de parcours (T).

10. Procédé selon l'une des revendications 4 à 9, dans lequel on fait commuter le signal de modulation ($U_{mod}$) entre plus de deux fréquences de modulation ($f_1$, $f_2$, $f_i$).

11. Procédé selon la revendication 10, dans lequel
on réalise une détermination d'un temps de parcours ($\tau$) au moyen d'une méthode des moindres carrés (Least Square Fit).

**12.** Procédé selon l'une des revendications 4 à 11, dans lequel on soumet le signal de modulation ($U_{mod}$) à une modulation d'amplitude périodique, en particulier de forme sinusoïdale.

**13.** Procédé selon l'une des revendications 4 à 12, dans lequel on choisit la basse fréquence de modulation ($f_2$) suivant le domaine de mesure $d_w$ selon l'équation

$$f_2 = (\pi/4).(c/d_w)$$

où c correspond à la vitesse d'onde.

**14.** Procédé selon la revendication 13, dans lequel le rapport entre la haute fréquence de modulation ($f_1$) et la basse fréquence de modulation ($f_2$) est égal à $f_1 = 2.f_2$.

**15.** Procédé selon l'une des revendications 4 à 14, dans lequel on soumet le signal de modulation ($U_{mod}$) à une modulation d'amplitude de forme rectangulaire.

**16.** Procédé selon la revendication 3, dans lequel

- on fait varier la fréquence de modulation ($f_1$, $f_2$, $f_i$) à l'aide d'un procédé utilisant les caractéristiques de fréquence, et
- on mesure la distance en déterminant au moins un point caractéristique, en particulier des points zéro ou des extremums.

**17.** Procédé selon la revendication 3, dans lequel

- on fait varier la fréquence de modulation ($f_1$, $f_2$, $f_i$) en continu à l'aide d'un procédé FMCW,
- on réalise une analyse spectrale d'au moins un signal de sortie ($U_a$, $U_b$) du PMD (PMD) et/ou d'au moins un signal dérivé de celui-ci ($U_d$), en particulier d'un signal différentiel ($U_d$),
- on recherche ensuite un ou plusieurs maximums dans le spectre résultant de l'analyse spectrale,
- on calcule une vitesse ou/et une distance à partir de la fréquence associée d'au moins un maximum.

**18.** Procédé selon la revendication 3, dans lequel

- on fait varier la fréquence de modulation ($f_1$, $f_2$, $f_i$) par pas discrets de distance connue à l'aide d'un procédé FSCW,
- on réalise une analyse spectrale d'au moins un signal de sortie ($U_a$, $U_b$) du PMD (PMD) et/ou d'au moins un signal dérivé de celui-ci ($U_d$), en particulier d'un signal différentiel ($U_d$),
- on recherche ensuite un ou plusieurs maximums dans le spectre résultant de l'analyse spectrale,
- on calcule une vitesse ou/et une distance à partir de la fréquence associée d'au moins un maximum.

**19.** Dispositif permettant de faire fonctionner un système PMD, comprenant

- au moins un PMD (PMD),
- au moins un émetteur (E),
- au moins un générateur de signaux (OSC, LO, DDS, VCO, PLL) au moyen duquel un signal de modulation ($U_{mod}$) peut être envoyé au PMD (PMD) et à l'émetteur (E),

**caractérisé en ce que**
au moyen dudit générateur de signaux (OSC, LO, DDS, VCO, PLL) le signal de modulation ($U_{mod}$) est commutable, au choix, entre au moins deux fréquences de modulation ($f_1$, $f_2$, $f_i$).

**20.** Dispositif selon la revendication 19, dans lequel l'émetteur (E) comprend au moins un laser, une DEL, une lampe à vapeur de mercure, un tube fluorescent ou un émetteur de micro-ondes.

**21.** Dispositif selon l'une des revendications 19 ou 20, dans lequel le générateur de signaux comprend un oscillateur (OSC), en particulier un oscillateur commandé en tension (VCO)

EP 1 307 718 B1

ou un oscillateur à fréquence fixe (LO), ou un synthétiseur PLL (PLL) ou un module DDS.

22. Dispositif selon l'une des revendications 19 à 21, dans lequel
le PMD (PMD) est relié via un convertisseur A/N (ADW) à un microprocesseur (MP).

23. Dispositif selon l'une des revendications 19 à 22, dans lequel
le PMD (PMD) intègre au moins deux circuits échantillonneurs-bloqueurs (Sample and Hold)dans lesquels on mémorise au moins un signal de sortie ($U_a$, $U_b$) du PMD (PMD) ou au moins un signal dérivé de celui-ci ($U_d$), en particulier un signal différentiel ($U_d$), lesquels signaux sont commutables en alternance en fonction des fréquences de modulation ($f_1$, $f_2$, $f_i$) réglées.

24. Dispositif selon la revendication 23, dans lequel
on utilise deux circuits échantillonneurs-bloqueurs par sortie d'extraction, lesquels sont commutables simultanément avec la commutation entre les fréquences de modulation ($f_1$, $f_2$, $f_i$).

25. Dispositif selon la revendication 24, dans lequel
un circuit d'évaluation analogue est monté en aval d'au moins un circuit échantillonneur-bloqueur, lequel circuit d'évaluation est soit externe, soit directement intégré dans une puce contenant le PMD (PMD).

26. Dispositif selon l'une des revendications 19 à 25, dans lequel le PMD (PMD) est réalisé de façon non intégrante.

Fig. 1 (Stand der Technik)

Fig. 2 (Stand der Technik)

Fig. 3

Fig. 4

Fig. 5

Fig. 6

Fig. 7

Fig. 8

Fig. 9

$$f_{up} = f_e + f_d$$

$$f_{dw} = f_e - f_d$$

$f_s(t)$

$f_e(t)$

Fig. 10

Fig. 11

Frequenz fi einstellen

Integrationszeit
abwarten

Meßwert i aufnehmen
Meßwert i speichern

Reset

?i=N

FFT

Maxima suchen
Entfernung ausgeben

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19704496 A1, R. Schwarte
- DE 19736693

**In der Beschreibung aufgeführte Nicht-Patentliteratur**

- Photomischdetektor erfasst 3D-Bilder. **HEINOL H. et al.** Elektronik. Weka Fachzeitschriftenverlag, 1999
- **HEINOL ; XU ; SCHULTE.** Laufzeitbasierte 3D-Kamerasysteme - Smart Pixel Lösungen. *DGZIP Fachtagung Optische Formerfassung,* 05. September 1999
- **G. STRANG.** Linear Algebra and its applications. Harcourt Brace Jovanovich College Publishers, 1988
- **STEVEN M. KAY.** Modern Spectral Estimation. PTR Prentice Hall, 1988
- **YBARRA et al.** Optimal Signal Processing of Frequency - Stepped CW Radar Data. *IEEE Transactions on Microwave Theory and Techniques,* Januar 1995, vol. 43 (1
- **A. OPPENHEIM ; W. SCHÄFER.** Discrete-Time Signal Processing. Prentice Hall, 1989
- **S. KAY ; S.L. MARPLE.** Digital Spectral Analysis with Applications. Prentice Hall, 1988